# EUROPÄISCHE PATENTSCHRIFT

(11) **EP 2 359 464 B1**
(45) Veröffentlichungstag und Bekanntmachung des Hinweises auf die Patenterteilung: **05.03.2014**
(21) Anmeldenummer: 09783351.1
(22) Anmeldetag: 24.09.2009
(51) Int. Cl.: H02N 1/00, G02B 26/08

(54) **VERFAHREN ZUM BETREIBEN EINES ELEKTROSTATISCHEN ANTRIEBS UND ELEKTROSTATISCHE ANTRIEBE**
METHOD FOR OPERATING AN ELECTROSTATIC DRIVE AND ELECTROSTATIC DRIVES
PROCÉDÉ DE FONCTIONNEMENT DE COMMANDE ÉLECTROSTATIQUE ET DES ENTRAINEMENTS ÉLECTROSTATIQUES

(30) Priorität: 19.11.2008 DE 102008043836
(43) Veröffentlichungstag der Anmeldung: 24.08.2011
(73) Patentinhaber: Robert Bosch GmbH, 70442 Stuttgart (DE)
(72) Erfinder: PIRK, Tjalf, 70195 Stuttgart (DE); PINTER, Stefan, 72764 Reutlingen (DE); FRITZ, Joachim, 72770 Reutlingen (DE); FRIESE, Christoph, 72764 Reutlingen (DE)
(86) Internationale Anmeldenummer: PCT/EP2009/062352
(87) Internationale Veröffentlichungsnummer: WO 2010/057703

(56) Entgegenhaltungen:
- EP-A1- 0 584 479
- DE-A1-102005 018 955
- US-A1- 2003 164 042
- US-A1- 2004 008 396
- US-A1- 2004 189 144
- US-A1- 2005 062 361

## Beschreibung

Die Erfindung betrifft Verfahren zum Betreiben eines elektrostatischen Antriebs. Des Weiteren betrifft die Erfindung elektrostatische Antriebe.

### Stand der Technik

Mikromechanische Bauteile, wie beispielsweise mikromechanische Torsionsaktoren oder translatorische Mikroaktoren, weisen häufig einen elektrostatischen Antrieb auf, dessen Elektroden als Mehrlagenelektroden ausgebildet sind. Oft wird ein elektrostatischer Antrieb mit mindestens zwei Mehrlagenelektroden ais Mehrlagen-Comb-Drive bezeichnet.

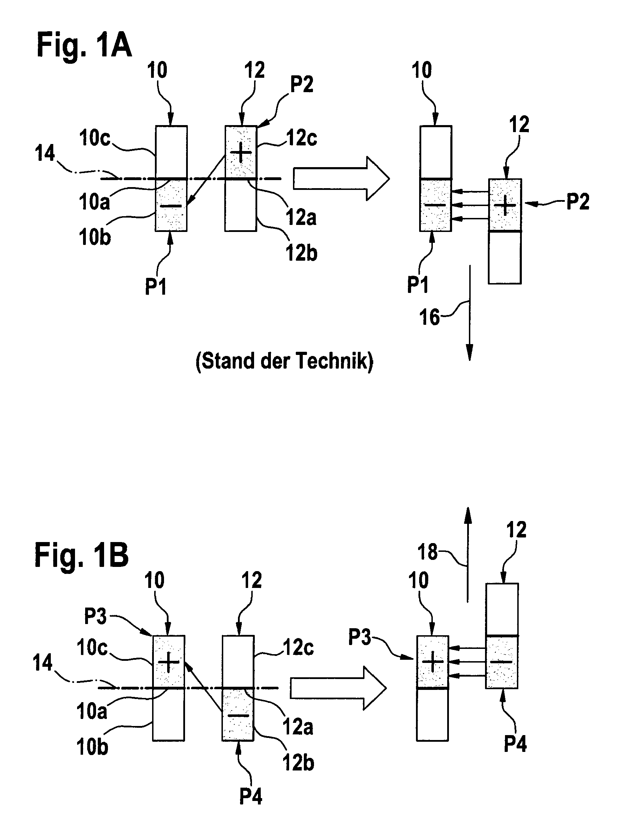

Fig. 1A und 1B zeigen Querschnitte zum Darstellen eines Aufbaus und einer Funktionsweise eines herkömmlichen elektrostatischen Antriebs mit Mehrlagenelektroden.

Der herkömmliche elektrostatische Antrieb weist eine Stator-Elektrode 10 und eine Aktor-Elektrode 12 auf. Die beiden Elektroden 10 und 12 sind als Mehrlagenelektroden ausgebildet. Dabei unterteilt eine erste Trennschicht 10a die Stator-Elektrode 10 in zwei voneinander elektrisch isolierte Stator-Elektrodenuntereinheiten 10b und 10c. Entsprechend wird die Aktor-Elektrode 12 von einer zweiten Trennschicht 12a in zwei voneinander elektrisch isolierte Aktor-Elektrodenuntereinheiten 12b und 12c unterteilt.

Liegt zwischen den Stator-Elektrodenuntereinheiten 10b und 10c und den AktorElektrodenuntereinheiten 12b und 12c keine Spannung ungleich 0 an, so liegen die beiden Trennschichten 10a und 12a auf einer Trennebene 14. Die erste StatorElektrodenuntereinheit 10b und die erste Aktor-Elektrodenuntereinheit 12b élegen in Bezug auf die Trennebene 14 in einer ersten Auslenkungsrichtung 16 der Aktor-Elektrode 12. Entsprechend liegen die zweite Stator-Elektrodenuntereinheit 10c und die zweite AktorElektrodenuntereinheit 12c in Bezug auf die Trennebene 14 ist einer zweiten Auslenkungsrichtung 18 der Aktor-Elektrode 12.

Wie in Fig. 1A dargestellt, bewirkt das Anlegen eines ersten Potenzials P1 an die erste Stator-Elektrodenuntereinheit 10b und das Anlegen eines zweiten Potenzials P2 ungleich dem ersten Potenzial P1 an die zweite Aktor-Elektrodenuntereinheit 12c eine anziehende Kraft zwischen der ersten Stator-Elektrodenuntereinheit 10b und der zweiten AktorElektrodenuntereinheit 12c und damit eine Auslenkung der Aktor-Elektrode 12 aus ihrer (spannungslosen) Ausgangsstellung in die erste Auslenkungsrichtung 16. Entsprechend führt das Anlegen eines dritten Potenzials P3 an die zweite Stator-Elektrodenuntereinheit 12c und eines von dem dritten Potenzial P3 abweichenden vierten Potenzials P4 an die erste Aktor-Elektrodenuntereinheit 12b zu einem Verstellen der Aktor-Elektrode 12 aus ihrer Ausgangsstellung in die zweite Auslegungsrichtung 18 (siehe Fig. 1B).

Der dargestellte elektrostatische Antrieb weist somit den Vorteil auf, dass die Aktor-Elektrode 12 aus ihrer spannungslosen Ausgangsstellung in zwei verschiedene Auslenkungsrichtungen 16 und 18 verstellbar ist. Vorzugsweise ist die zweite Auslenkungsrichtung 18 der ersten Auslenkungsrichtung 16 entgegengerichtet.

Das Ansteuerverfahren der Fig. 1A und 1B ist aus dem Stand der Technik als SEA (Switching Electrode Actuator) bekannt. Dabei werden an verschiedene Elektrodenuntereinheiten 10b, 10c, 12b und 12c beliebige, unabhängige elektrische Potenziale P1 bis P4 angelegt. Auf diese Weise ist es möglich, mittels des elektrostatischen Antriebs wahlweise eine Kraft in die Auslenkungsrichtung 16 oder in die Auslenkungsrichtung 18 zu erzeugen.

Allerdings liegt bei dem Ansteuerverfahren der Fig. 1A kein definiertes Potenzial an den nicht aktiv angesteuerten Elektrodenuntereinheiten 10c und 12b an. Entsprechend besitzen bei dem Ansteuerverfahren der Fig. 1 B die nicht aktiv angesteuerten Elektrodenuntereinheiten 10b und 12c kein definiertes Potenzial. Man bezeichnet die nicht aktiv angesteuerten Elektrodenuntereinheiten 10c und 12b (Fig. 1A) oder 10b und 12c (Fig. 1B) deshalb häufig auch als floatende Elektrodenuntereinheiten 10c und 12b oder 10b und 12c.

Für eine Richtungsumkehr der zuvor in die erste Auslenkungsrichtung 16 ausgelenkten Aktor-Elektrode 12 muss jedoch ein Potential ungleich Null an die zuvor nicht aktiv angesteuerten Elektrodenuntereinheiten 10c und 12b angelegt werden. Somit ist herkömmlicherweise eine elektrische Trennung zwischen einer (nicht skizzierten) Spannungsquelle zum Anlegen des Potentials ungleich Null und jeder der Elektrodenuntereinheiten 10b, 10c, 12b und 12c notwendig. Eine derartige elektrische Trennung, beispielsweise ein hochohmiger Schalter, ist jedoch nach dem Stand der Technik nur schwer zu realisieren. Die elektrische Trennung erfolgt in US 2 003 164 042 in der 501-Technologie, Silicon on Insolation. Andere Konzepte zur Steuerung elektrostatischer Antriebe sorgen dafür, dars alle Elektroden auf etneun bestimmten potenzial liegen und nicht schweben. Z.B. in US 2 004 008 396, US 2 004 189 144, EP 0 584 479, US 2 005 062 361. Offenbarung der Erfindung

Die Erfindung schafft ein Verfahren zum Betreiben eines elektrostatischen Antriebs mit den Merkmalen des Anspruchs 1, ein Verfahren zum Betreiben eines elektrostatischen Antriebs mit den Merkmalen des Anspruchs 6, ein Verfahren zum Betreiben eines elektrostatischen Antriebs mit den Merkmalen des Anspruchs 8, einen elektrostatischen Antrieb mit den Merkmalen des Anspruchs 9, einen elektrostatischen Antrieb mit den Merkmalen des Anspruchs 13 und einen elektrostatischen Antrieb mit den Merkmalen des Anspruchs 15.

Die vorliegende Erfindung beschreibt vorteilhafte Verfahren zum Betreiben eines elektrostatischen Antriebs mit mindestens zwei Mehrlagenelektroden (Mehrlangen-Comb-Drives), wie beispielsweise einem SEA-Antrieb. Dabei wird sichergesteilt, dass eine Auslenkungsrichtung der Aktor-Elektrode durch eine gezielte Anwendung einer Asymmetrie der Ansteuerpotenziale verlässlich definiert wird.

In einer Weiterbildung der Verfahren kann durch Aufheben oder Vermeiden der Asymmetrie der Ansteuerpotenziale nach einem Vorauslenken eine Maximierung der Verstellkraft erreicht werden. Somit wird eine maximale Ausnutzung der Ansteuerspannung in Hinblick auf die erzeugte Kraft gewährleistet. In einer besonders vorteilhaften Ausführungsform der Erfindung wird zur Ansteuerung lediglich ein Hochspannungspotenzial benötigt.

Floatende Elektrodenuntereinheiten müssen bei den erfindungsgemäßen Verfahren nicht befürchtet werden. Unter einem Anlegen eines Potentials wird ein aktives Anlegen eines Potentials zum Vermeiden von floatenden Elektrodenuntereinheiten verstanden.

Beispielsweise wird die Aktor-Elektrode in Bezug auf die Stator-Elektrode in eine erste Richtung, in welcher die erste Aktor-Elektrodenuntereinheit in Bezug auf die zweite Trennschicht liegt, vorausgeienkt, durch Anlegen eines zweiten Potentials, welches in einem Bereich zwischen dem an die erste Stator-Elektrodenuntereinheit angelegten ersten Potential und dem an die zweite Stator-Elektrodenuntereinheit und an die zweite Aktor-Elektrodenuntereinheit angelegten dritten Potential liegt, an die erste Aktor-Elektroderuntereinheit. Ebenso kann die Aktor-Elektrode in Bezug auf die Stator-Elektrode in eine zweite Richtung, in welcher die zweite Aktor-Elektrodenuntereinheit in Bezug auf die zweite Trennschicht liegt, vorausgelenkt werden, durch Anlegen eines ersten Potentials, welches in einem Bereich zwischen dem an die erste Aktor-Elektrodenuntereinheit angelegten zweiten Potential und dem an die zweite Stator-Elektrodenuntereinheit und an die zweite Aktor-Elektrodenuntereinheit angelegten dritten Potential liegt, an die erste Stator-Elektrodenuntereinheit. Somit kann die Aktor-Elektrode wahlweise in eine erste Auslenkungsrichtung oder in eine zweite Auslenkungsrichtung verstellt werden, wobei die zweite Auslenkungsrichtung vorzugsweise der ersten Auslenkungsrichtung entgegengerichtet ist.

In einem weiteren Verfahrensschritt wird die Aktor-Elektrode in Bezug auf die Stator-Elektrode aus der ersten End-Stellung in eine zweite End-Stellung weiter ausgelenkt, durch Reduzieren einer Differenz zwischen dem an die erste Stator-Elektrodenuntereinheit angelegten ersten Potential und dem an die erste Aktor-Elektrodenuntereinheit angelegten zweiten Potential. Dies gewährleistet ein vorteilhaftes Aufheben der Asymmetrie der Ansteuerpotenziale nach dem Vorauslenken zum Steigem der erreichbaren Verstellkraft.

Des Weiteren kann die Aktor-Elektrode in Bezug auf die Stator-Elektrode aus der zweiten End-Stellung in eine dritte Endstellung weiter ausgelenkt werden, durch Gleichsetzen des an die erste Stator-Elektrodenuntereinheit angelegten ersten Potentials und des an die erste Aktor-Elektrodenuntereinheit angelegten zweiten Potentials und Steigern einer Differenz zwischen dem an die zweite Stator-Elektrodenuntereinheit und an die zweite Aktor-Elektrodenuntereinheit angelegten dritten Potential und dem an die erste Stator-Elektrodenuntereinheit angelegten ersten Potential. Somit wird eine hohe Verstellkraft auf einfache Weise erreicht.

In einer alternative Ausführungsform werden zum Vorauslenken der Aktor-Elektrode in Bezug auf die Stator-Elektrode die Stator-Elektrode an eine Zweit-Stator-Elektrode und die Aktor-Elektrode an eine Zweit-Aktor-Elektrode so gekoppelt, dass über ein Verstellen der ZweitAktor-Elektrode in Bezug auf die Zweit-Stator-Elektrode die Aktor-Elektrode in Bezug auf die Stator-Elektrode verstellt wird, und zwischen der Zweit-Aktor-Elektrode und der Zweit-Stator-Elektrode eine Auslenkspannung ungleich Null zum Verstellen der Zweit-Aktor-Elektrode angelegt. Dabei sind die Zweit-Aktor-Elektrode von der Aktor-Elektrode und die Zweit-Stator-Elektrode von der Stator-Elektrode elektrisch isoliert. Vorzugsweise sind die Zweit-Stator-Elektrode und die Zweit-Aktor-Elektrode ein weiterer elektrischer Antrieb, welcher beispielsweise als Out-Of-Plane-Antrieb ausgebildet ist. Die alternative Ausführungsform ist jedoch nicht auf die Verwendung eines Out-Of-Plane-Antriebs beschränkt. Stattdessen kann jeder Typ eines elektrischen Antriebs für ein vorteilhaftes Vorauslenken der Aktor-Elektrode aus ihrer spannungslosen Ausgangsstellung verwendet werden.

Die in den oberen Abschnitten beschriebenen Vorteile sind auch bei einem entsprechenden elektrostatischen Antrieb gewährleistet.

Da die Aktor-Elektrode in ihrer Ausgangsstellung in der Ebene der mindestens einen Stator-Elektrode angeordnet ist, ist ein Herstellen der mindestens zwei Elektroden über ein Heraus-ätzen der Elektroden aus einer einzigen Elektrodenmaterialschicht vergleichsweise einfach ausführbar. Somit entfällt auch eine Justage der mindestens zwei Elektroden zueinander. Der elektrostatische Antrieb ist somit mittels eines einfach ausführbaren Herstellungsverfah-rens kostengünstig herstellbar, wobei gewährleistet ist, dass die mindestens zwei Elektroden in einen vergleichsweise geringen Abstand zueinander angeordnet werden. Dies verbessert das Verhältnis der erzielten Kraft gegenüber der angelegten Spannung, insbesondere gegenüber einem elektrostatischen Antrieb, dessen Aktor-Elektrode in ihrer Ausgangsposition außerhalb der Ebene der mindestens einen Stator-Elektrode angeordnet ist (Out-Of-Plane-Anordung).

Bei einem herkömmlichen elektrostatischen Antrieb mit Mehrlagenelektroden werden die nicht mit einem Potenzial belegten Elektrodenuntereinheiten (floatende Elektrodenunterein-heiten) nicht elektrisch angesteuert. Schaltungstechnisch ist diese Ansteuerung anspruchs-voll, denn alle Elektrodenuntereinheiten müssen, um einen floatenden Zustand zu erreichen, hochohmigen von der elektrischen Spannungsquelle trennbar sein. Außerdem sind mindestens zwei der vier erforderlichen Ansteuerkanäle zum Anlegen einer Hochspannung auszulegen oder es ist eine einzelne Spannungsquelle mit einem nachgeschalteten Hochspannungs-Umschalter zu verwenden. Dies macht den herkömmlichen elektrostatischen Antrieb mit Mehrlagenelektroden vergleichsweise teuer.

Einfacher ist es, alle vier Elektrodenuntereinheiten zu jedem Zeitpunkt an einer eigenen Spannungsquelle angebunden zu lassen. Vorzugsweise werden dabei mehrere Spannungs-quellen verwendet. Allerdings muss höchstens eine der verwendeten Spannungsquellen für Hochspannungen ausgelegt sein. Das mikromechanische Bauteil mit dem elektrostatischen Antrieb ist somit vergleichsweise kostengünstig herstellbar.

Vorzugsweise ist die Steuereinrichtung des elektrostatischen Antriebs zusätzlich so ausgelegt, dass sie sich bei einem Vorauslenken der Aktor-Elektrode in Bezug auf die Stator-Elektrode aus ihrer spannungslosen Ausgangsstellung in eine erste End-Stellung in den ersten Betriebsmodus, bei einem weiteren Auslenken der Aktor-Elektrode in Bezug auf die Stator-Elektrode aus der ersten End-Stellung in eine zweite End-Stellung in den zweiten Betriebsmodus und bei einem weiteren Auslenken der Aktor-Elektrode in Bezug auf die Stator-Elektrode aus der zweiten End-Stellung in eine dritte Endstellung in den dritten Betriebsmodus schaltet. Das erfindungsgemäße Verfahren ist somit einfach auf einen elektrostatischen Antrieb übertragbar.

Die Festlegung der Auslenkungsrichtung kann statt durch ein Asymmetriepotential (bzw. eine Asymmetriespannung) auch durch eine weitere Elektrodenuntereinheit geschehen. Entspre-chend ist auch eine Verschaltung möglich, durch welche die Benutzung von floatenden Potenzialen einem OOP-Aktor entspricht. Um die Elektronik einfach zu halten, können die floatenden Potenziale nicht angeschlossen werden.

Durch eine sinnvolle Platzierung der mindestens einen weiteren Elektrodenuntereinheit und deren An- bzw. Abspaltung kann die Auslenkungsrichtung bestimmt werden, ohne dass ein Asymmetriepotenzial benötigt wird. Insbesondere für Aktoren, die nur in eine Richtung auszulenken sind, ist diese Lösung vorteilhaft.

### Kurze Beschreibung der Zeichnungen

Weitere Merkmale und Vorteile der vorliegenden Erfindung werden nachfolgend anhand der Figuren erläutert. Es zeigen:
- Fig. 1A und 1B: Querschnitte zum Darstellen eines Aufbaus und einer Funktionsweise eines herkömmlichen elektrostatischen Antriebs mit Mehrlagenelektroden;
- Fig. 2A bis 2D: zwei schematische Darstellungen und zwei Koordinatensysteme zum Erläutern einer ersten Ausführungsform des elektrostatischen Antriebs;
- Fig. 3A - 3C: eine schematische Darstellung und zwei Koordinatensysteme zum Erläutern einer Ausführungsform des Verfahrens zum Betreiben eines elektrostatischen Antriebs; und
- Fig. 4: eine schematische Darstellung zum Erläutern einer zweiten Ausführungsform des elektrostatischen Antriebs.

### Ausführungsformen der Erfindung

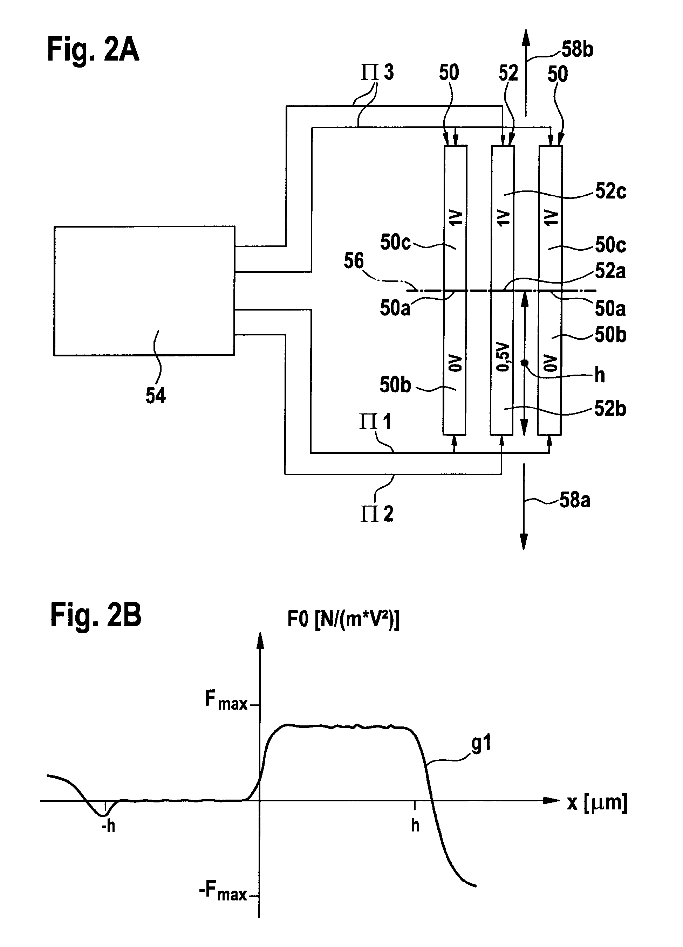

Fig. 2A bis 2D zeigen zwei schematische Darstellungen und zwei Koordinatensysteme zum Erläutern einer Ausführungsform des elektrostatischen Antriebs.

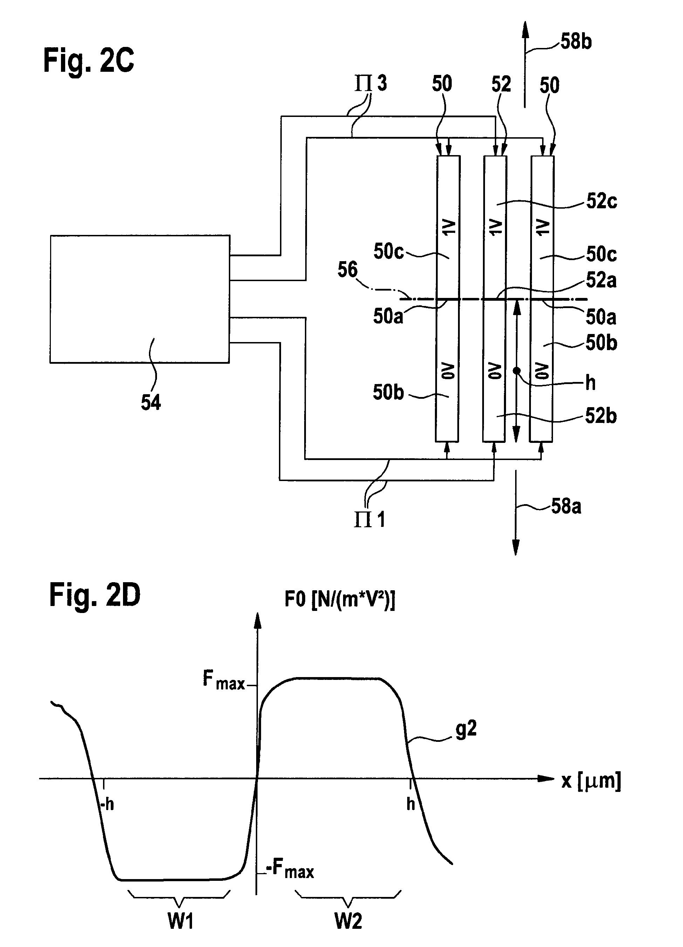

Der in den Fig. 2A und 2C schematisch dargestellte elektrostatische Antrieb umfasst mindestens eine Stator-Elektrode 50 und eine Aktor-Elektrode 52. Die Elektroden 50 und 52 können beispielsweise Kammelektroden sein. Allerdings sind die Elektroden 50 und 52 in den Fig. 2A und 2C nur schematisch wiedergegeben. Es wird hier ausdrücklich darauf hingewiesen, dass die vorliegende Erfindung nicht auf eine bestimmte Form der Elektroden 50 und 52 beschränkt ist.

Die Elektroden 50 und 52 sind als Mehrlagenelektroden ausgebildet. Die mindestens eine Stator-Elektrode 50 wird durch eine Trennschicht 50a in zwei voneinander elektrisch isolierte Stator-Elektrodenuntereinheiten 50b und 50c mit jeweils einer Höhe h unterteilt. Entsprechend wird auch die Aktor-Elektrode 52 durch eine Trennschicht 52a in zwei voneinander elektrisch isolierte Aktor-Elektrodenuntereinheiten 52b und 52c mit der Höhe h unterteilt.

Es wird jedoch darauf hingewiesen, dass die vorliegende Erfindung nicht auf zweilagige Elektroden 50 und 52 beschränkt ist. Stattdessen können die Elektroden 50 und 52 auch mindestens drei voneinander elektrisch isolierte Elektrodenuntereinheiten aufweisen.

Der elektrostatische Antrieb umfasst eine (nur schematisch dargestellte) Steuereinrichtung 54, mittels welcher ein Potenzial π1 bis π3 an die Elektrodenuntereinheiten 50b, 50c, 52b und 52c anlegbar ist. Liegt zwischen den Elektrodenuntereinheiten 50b, 50c, 52b und 52c keine Spannung ungleich 0 an, so befindet sich die Aktor-Elektrode 52 in ihrer Ausgangsstellung. In der spannungslosen Ausgangsstellung weist eine erste Aktor-Elektrodenuntereinheit 52b einen kleineren Abstand zu einer ersten Stator-Elektrodenuntereinheit 50b auf als eine zweite Aktor-Elektrodenuntereinheit 52c, wobei die erste Stator-Elektrodenuntereinheit 50b in Bezug auf die Trennschicht 50a und die erste Aktor-Elektrodenuntereinheit 52b in Bezug auf die Trennschicht 52a in einer ersten Auslenkungsrichtung 58a angeordnet sind. Demgegenüber sind eine zweite Stator-Elekctrodenuntereinheit 50c in Bezug auf die Trennschicht 50a und die zweiten Aktor-Elektrodenuntereinheit 52c in Bezug auf die Trennschicht 52a in einer zweiten Auslenkungsrichtung 58b angeordnet. Entsprechend hat die zweite AktorElektrodenuntereinheit 52c in der spannungslosen Ausgangsstellung einen kleineren Abstand zu zweiten Stator-Elektrodenuntereinheit 50c als die erste AktorElektrodenuntereinheit 52b.

Vorzugsweise ist die Aktor-Elektrode 52 in Bezug auf die mindestens eine Stator-Elektrode 50 so angeordnet, dass die Trennschichten 50a und 52a auf einer gemeinsamen Trennebene 56 liegen. Man spricht dabei auch von einer In-Plane-Anordnung der Elektroden 50 und 52.

Die Steuereinrichtung 54 weist mindestens zwei Betriebsmoden zum Anlegen eines Potenzials *π*1 bis *π*3 an die Elektrodenuntereinheiten 50b, 50c, 52b und 52c auf. In einem ersten Betriebsmodus, welcher nachfolgend als asymmetrischer Ansteuermodus bezeichnet wird, ist die Steuereinrichtung 54 dazu ausgelegt, an die erste Stator-Elektrodenuntereinheit 50b ein erstes Potenzial *π*1 und an die erste Aktor-Elektrodenuntereinheit 52b ein von dem Potenzia! *π*1 abweichendes Potenzial *π*2 anzulegen. Des Weiteren ist die Steuereinrichtung 54 im asymmetrischer Ansteuermodus dazu ausgelegt, an die zweite Stator-Elektrodenuntereinheit 50c und die zweite Aktor-Elektrodenuntereinheit 52c ein drittes Potenzial *π*3, welches ungleich dem ersten Potenzial *π*1 oder dem zweiten Potenzial *π*2 ist, anzulegen.

Die zweite Stator-Elektrodenuntereinheit 50c und die zweite Aktor-Elektrodenuntereinheit 52c weisen somit bei dem asymmetrischen Ansteuermodus das gleiche Potential *π*3 auf. Man kann deshalb sagen, dass die zweite Stator-Elektrodenuntereinheit 50c und die zweiten Aktor-Elektrodenuntereinheit 52c bezüglich ihres angelegten Potenzials *π*3 eine Symmetrie aufweisen.

Das bei dem asymmetrischen Ansteuermodus an die erste Aktor-Elektrodenuntereinheit 52b angelegte Potenzial *π*2 kann beispielsweise in einen Wertebereich zwischen den Potenzialen *π*1 und *π*3 liegen. (Auf ein anderes Beispiel für die Verteilung der Potenziale *π*1, *π*2 und *π*3 wird unten noch genauer eingegangen.) Es wird hier darauf hingewiesen, dass es bei einem Potenzial *π*2 in einen Wertebereich zwischen den Potenzialen *π*1 und *π*3 nicht von Bedeutung ist, ob dass Potenzial *π*1 kleiner als das Potenzial *π*3 ist, oder umgekehrt.

Das Potential *π*2 in einen Wertebereich zwischen den Potenzialen *π*1 und *π*3 bewirkt somit eine Asymmetrie zwischen den angelegten Potentialen *π*1 und *π*2 der ersten Stator-Elektrodenuntereinheit 50b und der ersten Aktor-Elektrodenuntereinheit 52b. Man kann das Potenzial *π*2 in einen Wertebereich zwischen den Potentialen *π*1 und *π*3 deshalb als A-symmetriepotenzial *π*2 bezeichnen.

Selbstverständlich kann auch zusätzlich eine weitere Elektrodenuntereinheit der Elektroden 50 und 52 mit einem abweichenden Potential beaufschlagt werden, was jedoch einen zusätzlichen Arbeitsaufwand bedeutet. Da eine derartige Erweiterung des asymmetrischen Ansteuermodus für einen Fachmann durch die Fig. 2A nahegelegt ist, wird hier nicht darauf eingegangen.

Das Anlegen der Potenziale *π*1 bis *π*3 an die Elektrodenuntereinheiten 50b, 50c, 52b und 52c erfolgt vorzugsweise über ein Anlegen einer Spannung zwischen der zugehörigen Elektrodenuntereinheit 50b, 50c, 52b oder 52c und einer nicht dargestellten Erdung, In dem Beispiel der Fig. 2A betragen diese Spannungen für die erste Stator-Elektrodenuntereinheit 50b 0V, für die erste Aktor-Elektrodenuntereinheit 52b 0,5V und für die zweite Stator-Elektrodenuntereinheit 50c und die zweite Aktor-Elektrodenuntereinheit 52c jeweils 1V. Es wird hier jedoch darauf hingewiesen, dass die hier angegebenen Werte nur beispielhaft zu verstehen sind. Insbesondere ist der hier beschriebene asymmetrische Ansteuermodus nicht auf eine Asymmetriespannung beschränkt, welche die Hälfte der Differenz der an den Elektrodenuntereinheiten 50b und 52c angelegten Spannungen beträgt.

Aufgrund des angelegten Asymmetriepotenzial *π*2, bzw. aufgrund der Asymmetriespannung, ist die anziehende Kraft zwischen der ersten Stator-Elektrodenuntereinheit 50b und der zweiten Aktor-Elektrodenuntereinheit 52c größer als die anziehende Kraft zwischen der zweiten Stator-Elektrodenuntereinheit 52b und der ersten Aktor-Elektrodenuntereinheit 52b. Das angelegte Asymmetriepotenzial *π*2 bewirkt somit eine Auslenkung der Aktor-Elektrode 52 in Bezug auf die Stator-Elektrode aus der spannungslosen Ausgangsstellung in die erste Auslenkungsrichtung 58a.

Das in Fig. 2B dargestellte Koordinatensystem weist als Abszisse eine Auslenkung x (in *µ*m) entlang der ersten Ausrichtungsrichtung 58a auf. Die Ordinaten des Koordinatensystems gibt eine normierte Kraft F0 (in N/(m*V2)) an.

Der in Fig. 2B dargestellte Verlauf (Graph g1) der normierten Kraft F0 macht deutlich, dass bei dem beschriebenen asymmetrischen Ansteuermodus auf die sich in ihrer Ausgangsstellung bei einer Auslenkung x gleich 0 befindende Aktor-Elektrode 52 eine durch das Asymmetriepotenzial *π*2 definierte Kraft wirkt, durch welche eine Richtung, in welche die AktorElektrode 52 in Bezug auf die Stator-Elektrode 50 ausgelenkt wird, eindeutig und unabhängig von leichten geometrischen Asymmetrien der Elektroden 50 und 52 festgelegt wird. Für die in Fig. 2A angegebenen Spannungen ist diese Richtung gleich der ersten Ausienkungsrichtung 58a. Auf die in ihrer Ausgangsstellung vorliegende Aktor-Elektrode 52 wirkt bei den angegebenen Spannungen keine positive normierte Kraft F0, welche ein Verstelien der Aktor-Elektrode 52 in die zweite Auslenkungsrichtung 58b bewirkt.

Über ein Variieren der angelegten Potentiale *π*1 bis *π*3 ist es jedoch auch möglich, die Aktor-Elektrode 52 in Bezug auf die Stator-Elektrode 50 in die zweite Auslenkungsrichtung 58b auszulenken, Beispielsweise wird dabei ein Potential *π*1 an die erste Stator-Elektrodenuntereinheit 50b angelegt, welches in einem Wertebereich zwischen dem Potential *π*2 der ersten Aktor-Elektrodenuntereinheit 52b und dem Potential *π*3 der zweiten Stator-Elektrodenuntereinheit 50c und der zweiten Aktor-Elektrodenuntereinheit 52c liegt. In diesem Fall kann man von einem Asymmetriepotenzial *π*1 sprechen. Aufgrund des Asymmetriepotenzials *π*1 ist die anziehende Kraft zwischen der ersten Stator-Elektrodenuntereinheit 50b und der zweiten Aktor-Elektrodenuntereinheit 52c kleiner als die anziehende Kraft zwischen der zweiten Stator-Elektrodenuntereinheit 52c und der ersten Aktor-Elektrodenuntereinheit 52b. Das Asymmetriepotenzial *π*1 bewirkt somit eine Auslenkung der Aktor-Elektrode 52 in Bezug auf die Stator-Elektrode aus der spannungslosen Ausgangsstellung in die zweite Auslenkungsrichtung 58b.

Der asymmetrische Ansteuermodus weist somit den Vorteil auf, dass die gewünschte Richtung, in welche die Aktor-Elektrode 52 in Bezug auf die Stator-Elektrode 50 ausgelenkt werden soll, auf einfache Weise festlegbar ist.

Bei dem in Fig. 2C dargestellten zweiten Betriebsmodus, weicher im Weiteren als symmetrischer Ansteuermodus bezeichnet wird, ist die Steuereinrichtung 54 dazu ausgelegt, an die erste Stator-Elektrodenuntereinheit 50b und die erste Aktor- Elektrodenuntereinheit 52b ein gleiches Potenzial *π*1 anzulegen. Zusätzlich wird an die zweite Stator-Elektrodenuntereinheit 50c und die zweite Aktor-Elektrodenuntereinheit 52c ein von dem Potenzial *π*1 abweichendes Potenzial *π*3 angelegt. Somit weisen in dem zweiten Betriebsmodus die erste Stator-Elektrodenuntereinheit 50b und die erste Aktor- Elektrodenuntereinheit 52b ein "symmetrisches" Potenzial *π*1 und die zweite Stator-Elektrodenuntereinheit 50c und die zweite Aktor-Elektrodenuntereinheit 52c ein "symmetrisches" Potenzial *π*3 auf.

Für den symmetrischen Ansteuermodus erhält man den in Fig. 2D dargestellten Verlauf (Graph g2) der normierten Kraft F0 über die Auslenkung x. Die Abszisse und die Ordinate des Koordinatensystems der Fig. 2D entsprechen dabei der Abszisse und der Ordinate des Koordinatensystems der Fig. 2B.

Der Verlauf der normierten Kraft F0 für den symmetrischen Ansteuermodus zeigt in den Wertebereichen W1 und W2 für eine größere Auslenkung x in beiden Auslenkungsrichtungen 58a und 58b deutliche Plateaus. Bei einem Vergleich der Koordinatensysteme der Fig. 2B und 2D wird deutlich, dass die normierte Kraft F0 in den Wertebereichen W1 und W2 mit einer maximalen normierten Kraft Fmax deutlich größer als eine maximal erreichbare normierte Kraft F0 des asymmetrischen Ansteuermodus ist. Die in den Wertebereichen W1 und W2 erreichbare normierte Kraft F0 entspricht einer Out-Of-Plane-Anordnung eines elektrostatischen Aktors. Der symmetrische Ansteuermodus ist damit in den Wertebereichen W1 und W2 dem asymmetrischen Ansteuermodus vorzuziehen.

Allerdings kehrt sich die Richtung der normierten Kraft F0 bei einer Auslenkung x von etwa 0 um. Die genaue Nullstelle der normierten Kraft F0 kann leicht von der Auslenkung x gleich 0 abweichen. Beispielsweise ist die Nullstelle der normierten Kraft F0 durch Asymmetrien in der Geometrie der Elektroden 50 und 52 definiert, welche oft durch Schwankungen im Herstellungsprozess verursacht werden. (In Fig. 2D wurde jedoch die Asymmetrie anhand der normierten Kraft F0 nicht wiedergegeben.)

Somit besteht die Möglichkeit, mittels einer bei der Herstellung der Elektroden 50 und 52 künstlich eingebrachten Asymmetrie die Richtung der Auslenkung der Aktor-Elektrode 52 in Bezug auf die Stator-Elektrode 50 aus ihrer spannungslosen Ausgangsstellung festzulegen. Eine derartige Festlegung der Auslenkungsrichtung 58a oder 58b ist jedoch während eines Betriebs des elektrostatischen Antriebs mit den Elektroden 50 und 52 nicht mehr aufhebbar, Damit ist es beispielsweise nicht möglich, die Aktor-Elektrode 52 nach der Festlegung für die erste Auslegungsrichtung 58a in die zweite Auslenkungsrichtung 58b aus der Ausgangsstellung zu verstellen. Dies schränkt die Nutzungsmöglichkeiten für einen derartigen elektrostatischen Antrieb ein.

Die Steuereinrichtung 54 ist deshalb dazu ausgelegt, ein Vorauslenken der Aktor-Elektrode 52 aus ihrer spannungslosen Ausgangsstellung in Bezug auf die Stator-Elektrode in dem asymmetrischen Ansteuermodus auszuführen. Somit wird die gewünschte Ausienkungsrichtung 58a oder 58b durch ein entsprechendes Asymmetriepotential *π*1 oder *π*2 festgelegt. Diese Festlegung der gewünschten Auslenkungsrichtung 58a oder 58b kann während des Betriebs immer wieder neu durchgerührt werden. So schließt eine einmalige Wahl der ersten Auslenkungsrichtung 58a eine spätere Wahl der zweiten Auslenkungsrichtung 58b nicht aus.

Bei einem Vergleich der Koordinatensysteme der Fig. 2B und 2D wird deutlich, dass die erreichbare maximale normierte Kraft F0 des asymmetrischen Ansteuermodus deutlich niedriger ist als die erreichbare maximale normierte Kraft F0 des symmetrischen Ansteuermodus. Es ist deshalb nicht sinnvoll, den asymmetrischen Ansteuermodus über den gesamten Bereich der Auslenkung x der Aktor-Elektrode 52 in eine festgelegte Auslenkungsrichtung 58a oder 58b beizubehalten.

Vorzugsweise geschieht der Wechsel aus dem asymmetrischen Ansteuermodus in den symmetrischen Ansteuermodus über einen Zwischenansteuermodus, in welchem sich die angelegten Potentiale *π*1 und *π*2 einander annähern. Die Asymmetrie zwischen den angelegten Potentiale *π*1 und *π*2 wird dabei beispielsweise schrittweise oder stetig aufgehoben. Sind die angelegten Potentiale *π*1 und *π*2 (nahezu) gleich, so wird die Steuereinrichtung 54 aus dem Zwischenansteuermodus in den symmetrischen Ansteuermodus geschaltet. Als Alternative dazu ist es aber auch möglich, über ein abruptes Gleichsetzen der angelegten Potentiale *π*1 und *π*2 direkt aus dem asymmetrischen Ansteuermodus in den symmetrischen Ansteuermodus überzugehen.

Das weitere Auslenken der Aktor-Elektrode 52 erfolgt anschließend durch ein Steuern der angelegten Potenziale *π*1 und *π*3 im symmetrischen Ansteuermodus so, dass eine Differenz zwischen den angelegten Potenzialen *π*1 und *π*3 zunimmt Dabei nutzt man die Tatsache, dass über den symmetrischen Ansteuermodus eine größere normierte Kraft F0 erreichbar ist (vgl. Fig. 2B und 2D).

Der anhand der Fig. 2A - 2D dargestellte elektrostatische Antrieb kann in einem mikromechanischen Bauteil eingesetzt werden. Ein derartiges mikromechanisches Bauteil ist beispielsweise ein Torsionsaktor wie ein Mikrospiegel. Ebenso kann der elektrostatische Antrieb in einem translatorischen Aktor, bei welchem eine Kraft senkrecht zu einer Chip-oberfläche erzeugt wird, eingesetzt werden.

Ein mögliches Einsatzgebiet des elektrostatischen Antriebs ist beispielsweise ein Head-Up-Display im Kraftfahrzeugbereich und ein Miniprojektor im Consumer-Bereich. Des Weiteren ist die Verwendung des elektrostatischen Antriebs in einem Oberflächenscanner oder in einem Schaltspiegel eines optischen Netzwerks (Optical-Cross-Connect) denkbar.

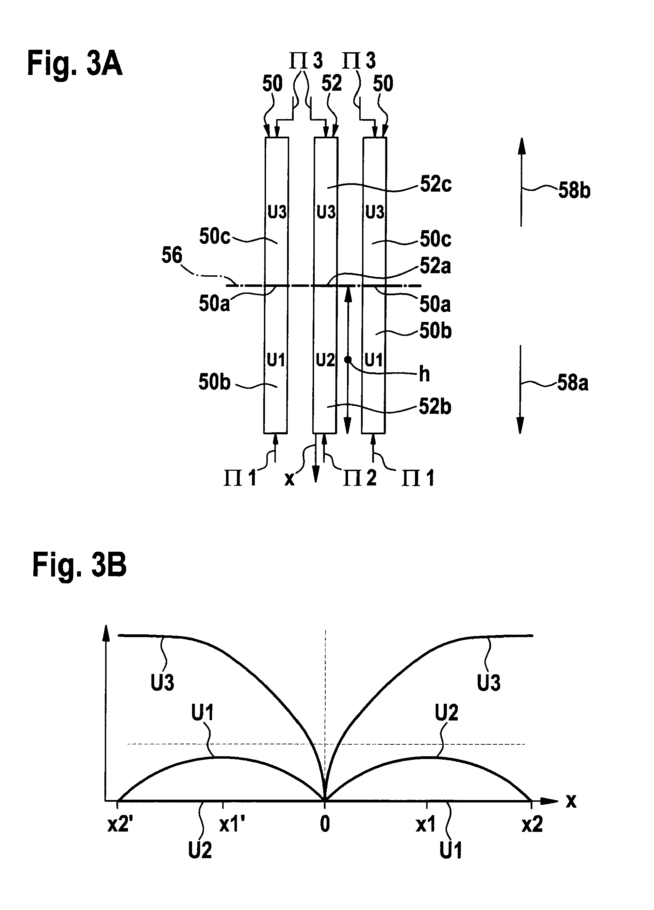

Fig. 3A - 3C zeigen eine schematische Darstellung und zwei Koordinatensysteme zum Erläutern einer Ausführungsform des Verfahrens zum Betreiben eines elektrostatischen Antriebs.

Der in Fig. 3A schematisch wiedergegebene elektrostatische Antrieb weist die bereits beschriebene Ausbildung der Elektroden 50 und 52 als Mehrlagenelektroden auf. Liegt zwischen den Elektrodenuntereinheiten 50b, 50c, 52b und 52c keine Spannung U1 bis U3 an, so befindet sich die Aktor-Elektrode 50 in ihrer Ausgangsstellung in Bezug auf die beiden Stator-Elektroden 50. Vorzugsweise liegen die Trennschichten 50a und 50b in der spannungslosen Ausgangsstellung der Aktor-Elektrode 50 auf einer Trennebene 56. Die ersten Stator-Elektrodenuntereinheiten 50b und die erste Aktor-Elektrodenuntereinheit 52b liegen in Bezug auf die Trennebene 56 in einer ersten Auslenkungsrichtung 58a. Entsprechend liegen die zweiten Stator-Elektrodenuntereinheiten 50c und die zweite Aktor-Elektrodenuntereinheit 52c in Bezug auf die Trennebene 56 in einer zweiten Auslenkungsrichtung 58b.

Anhand der Fig. 3B lässt sich der zeitliche Ablauf des dargestellten Verfahrens erläutern. Die Abszisse des Koordinatensystems der Fig. 3B ist eine Auslenkung x, um welche die Aktor-Elektrode 52 aus ihrer spannungslosen Ausgangsstellung durch Anlegen einer Spannung U1 bis U3 an die Elektrodenuntereinheiten 50b, 50c, 52b und 52c verstellt wird. (Bei der dargestellten Ausführungsform erfolgt das Anlegen eines Potenzials über das Anlegen der Spannungen U1 bis U3 zwischen einer zugehörigen Elektrodenuntereinheit 50b, 50c, 52b oder 52c und einer (nicht dargestellten) Erdung.) Die Ordinate des Koordinatensystems gibt die angelegten Spannungen U1 bis U3 wieder.

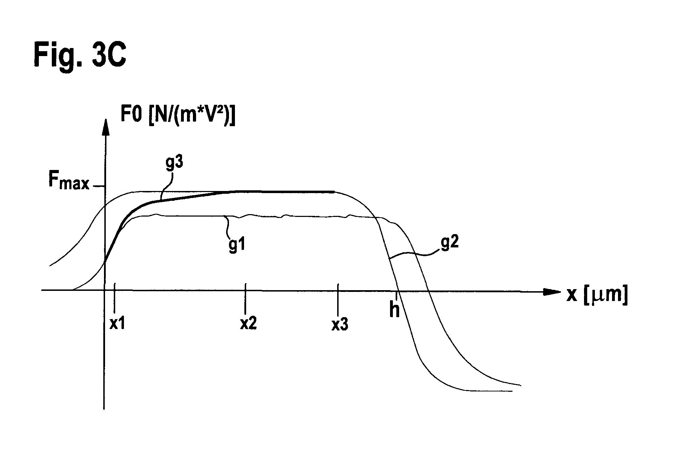

Das in Fig. 3C dargestellte Koordinatensystem gibt den Verlauf der normierten Kraft F0 entlang der Auslenkung x als Graph g3 an. Die Abszisse entspricht dabei der Auslenkung x (in *µ*m). Mittels der Ordinate wird die normierte Kraft F0 (in N/(m*V2)) angegeben. Zur besseren Veranschaulichung des hier beschriebenen Verfahrens zum Betreiben eines elektrostatischen Antriebs sind auch die Graphen g1 und g2 der Fig. 2B und 2D in das Koordinatensystem der Fig. 3C eingetragen.

Für ein Auslenken der Aktor-Elektrode 52 aus ihrer spannungslosen Ruhestellung mit einer Auslenkung x gleich 0 werden die Spannungen U1 bis U3 an die Elektrodenuntereinheiten 50b, 50c, 52b und 52c angelegt. Dabei erfolgt das Anlegen der Spannungen U1 bis U3 entsprechend dem oben schon beschriebenen asymmetrischen Ansteuermodus, welcher für kleine Auslenkungen x mit x1'<x<x1 geeignet ist.

Für das Vorauslenken der Aktor-Elektrode 52 wird eine erste Spannung U1 zwischen den ersten Stator-Elektrodenuntereinheiten 50b und der Erdung angelegt. An die erste Aktor-Elektrodenuntereinheit 52b wird die zweite Spannung U2 angelegt, wobei zwischen den Spannungen U1 und U2 eine Asymmetrie vorliegt, welche unten noch genauer beschrieben wird. Insbesondere kann auf diese Weise mittels der Asymmetriespannung U2 eine gewünschte Auslenkungsrichtung 58a oder 58b festgelegt werden.

Demgegenüber wird zwischen einer Erdung und jeweils den zweiten Stator-Elektrodenuntereinheiten 50c und der zweiten Aktor-Elektrodenuntereinheit 52c eine dritte Spannung U3 angelegt. Die Elektrodenuntereinheiten 50c und 52c weisen somit hinsichtlich ihrer angelegten Spannung U3 eine Symmetrie auf.

Vorzugsweise wird beim Verstellen der Aktor-Elektrode 52 aus ihrer Ausgangsstellung in die erste Endstellung mit der Auslenkung x1 die erste Spannung U1 konstant bei 0V gehalten. Demgegenüber nimmt die dritte Spannung U3 stetig zu. Die zweite Spannung U2 wird bei einer Auslenkung x zwischen 0 und x1 stetig gesteigert, liegt dabei jedoch in einem Bereich zwischen den Spannungen U1 und U3.

Bis zur Auslenkung x=x1 liegt der Graph g3 auf dem Graphen g1 des asymmetrischen Ansteuermodus. Dabei macht man sich die Tatsache zunutze, dass die mittels des oben beschriebenen Verfahrensschritts erzielbare normierte Kraft F0 eine gewünschte Auslenkungsrichtung 58a oder 58b eindeutig festlegbar ist.

Nach einem Erreichen der ersten Endstellung mit der Auslenkung x1 erfolgt das weitere Auslenken der Aktor-Elektrode 52 in einem Verfahrensschritt entsprechend dem oben beschriebenen Zwischenmodus, welcher einen Übergang aus dem asymmetrischen Ansteuermodus in den symmetrischen Ansteuermodus darstellt. (Dieser Übergang wird für das weitere Auslenken der Aktor-Elektrode 52 zum Erreichen einer Auslenkung x>x1 gewählt, da mittels der symmetrischen Ansteuerung bei diesen großen Auslenkungen x>x2 eine im Verhältnis zu der angelegten Spannung größere normierte Kraft F0 erzeugbar ist.)

Bei dem weiteren Auslenken der Aktor-Elektrode 52 aus der ersten Endstellung mit der Auslenkung x=x1 in eine zweite Endstellung mit der Auslenkung x=x2 wird die erste Spannung U1 weiterhin konstant bei 0V gehalten. Die zweite Spannung U2 wird reduziert und somit der ersten Spannung U1 angenähert. Das Reduzieren der zweiten Spannung U2 kann stetig oder schrittweise erfolgen. Die dritte Spannung U3 wird gesteigert oder bei einer Abnahme der zweiten Spannung U2 konstant gehalten. Es wird hier darauf hingewiesen, dass die zweite Spannung U2 auch zwischenzeitlich konstant gehalten werden kann, während die dritte Spannung U3 gesteigert wird.

Der in den vorhergehenden Absatz beschriebene Verfahrensschritt bewirkt eine Zunahme der erreichten normierten Kraft F0 (siehe Graph g3 in Fig. 3C). Beispielsweise kann diese Zunahme der erreichten normierten Kraft F0 dazu genutzt werden, vergleichsweise kleine Spannungen U1 bis U3 an die Elektrodenuntereinheiten 50b, 50c, 52b und 52c anzulegen.

Ab der Auslenkung x=x2 weisen die Spannungen U1 und U2 beide den gleichen Wert, beispielsweise eine Spannung U1 gleich 0V auf. Für ein weiteres Verstellen der Aktor-Elektrode 52 aus der zweiten Endstellung mit einer Auslenkung x=x2 in eine dritte Endstellung mit einer Auslenkung x=x3 werden die Spannungen U1 und U2 gleichgehalten. Eine Asymmetrie bezüglich der Spannungen U1 und U2 liegt bei einer Auslenkung x>x2 somit nicht mehr vor. Vorzugsweise nimmt nur die Spannung U3 während des weiteren Auslenkens der Aktor-Elektrode 52 zu.

Bei einer Auslenkung x2<x<x3 liegt der Graph g3 auf dem Graphen g2 des symmetrischen Ansteuermodus. Für das Verstellen der Aktor-Elektrode 52 wird somit die maximale normierte Kraft Fmax gewonnen. Das hier beschriebene Verfahren entsprechend einer Kombination des asymmetrischen Ansteuermodus und des symmetrischen Ansteuermodus ist deshalb besonders vorteilhaft,

Wie anhand der Fig. 3B deutlich wird, ist es mittels des hier beschriebenen Verfahrens auch möglich, die Aktor-Elektrode 52 in eine zweite Auslenkungsrichtung zu verstellen. Dies ist ein signifikanter Vorteil des hier beschriebenen Verfahrens gegenüber einem OOP-Aktor (Out-Of-Plane-Aktor).

Ein OOP-Aktor mit zwei Auslenkungsrichtungen erfordert zwei getrennte Comb-Drive-Bereiche, die jeweils nur für eine Auslenkungsrichtung verwendet werden. Demgegenüber erfordert das hier beschriebene Verfahren nur einen Comb-Drive-Bereich, welcher für beide Auslenkungsrichtungen 58a und 58b verwendbar ist. Dies ermöglicht eine Reduzierung der Größe des elektrostatischen Antriebs bei einem Beibehalten der Anzahl der möglichen AusJenkungsrichtungen 58a und 58b. insbesondere ist somit gewährleistet, dass ein mittels des Verfahrens betriebener elektrostatischer Antrieb leichter in ein mikromechanisches Bauteil einsetzbar ist.

Für ein Verstellen der Aktor-Elektrode 52 aus der spannungslosen Ausgangsstellung mit einer Auslenkung x=0 in eine Auslenkung x=x1' wird die Spannung U2 konstant bei 0 gehalten. Die Spannung U3 wird gesteigert. Die Asymmetriespannung U1 wird in einem Bereich zwischen den Spannungen U2 und U3 gewählt, wobei die Spannung U1 fortlaufend gesteigert wird. Auf diese Weise ist eine gewünschte Auslenkungsrichtung, welche das Verstellen der Aktor-Elektrode 52 in die Auslenkung x=x1' anstelle der Auslenkung x=x1' ermöglicht, gewährleistet.

Ab der Auslenkung x=x1' wird die Spannung U1 bei konstant gehaltener Spannung U2 und stetig zunehmender Spannung U3 stetig reduziert. Nach dem Erreichen einer Auslenkung x=x2' werden die Spannungen U1 und U2 gleich gehalten und die Spannung U3 wird gesteigert.

Das in den vorhergehenden Absätzen beschriebene Verfahren ist mittels einer vergleichsweise kostengünstigen Steuereinrichtung ausführbar. Beispielsweise weist die Sieuerehrichtung zum Anlegen der Spannungen U1 bis U3 vier Spannungsquellen auf. Die Spannungen U1 und U2 bleiben während des gesamten Bereichs der Auslenkung 0<x<x3 vergleichsweise niedrig. Lediglich der Verlauf der Spannung U3 erfordert evtl. bei großen Auslenkungen x>x2 oder x<x2' hohe elektrische Potenziale. Somit ist das Verfahren mit nur höchstens einer Hochspannungsquelle ausführbar. Dies spart zusätzlich zu weiteren teuren Hochspannungsquellen das Ausbilden einer größeren Anzahl von Zuleitungen mit geeigneter isolationen zum Ankoppeln der weiteren Hochspannungsquellen.

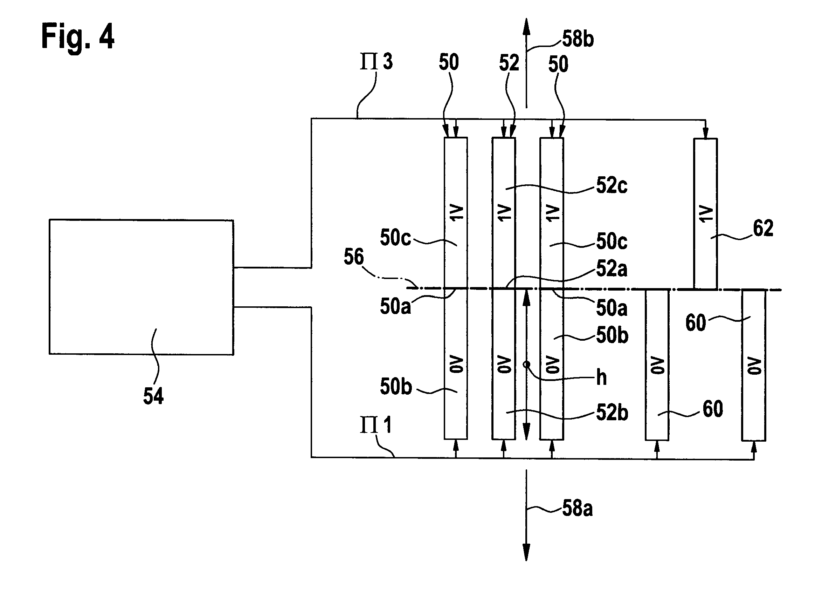

Fig. 4 zeigt eine schematische Darstellung zum Erläutern einer zweiten Ausführungsform des elektrostatischen Antriebs.

Der in Fig. 4 schematisch wiedergegebene elektrostatische Antrieb umfasst die schon beschriebenen Komponenten 50 bis 54. Zusätzlich weist der elektrostatische Antrieb eine an die Stator-Elektrode 50 gekoppelte Zweit-Stator-Elektrode 60 und eine an die AktorElektrode 52 gekoppelte Zweit-Aktor-Elektrode 62. Die Zweit-Elektroden 60 und 62 sind dabei so an die jeweilige Elektrode 50 oder 52 (direkt oder indirekt) gekoppelt, dass über ein Verstellen der Zweit-Aktor-Elektrode 62 in Bezug auf die Zweit-Stator-Elektrode 60 die Aktor-Elektrode 52 in Bezug auf die Stator-Elektrode 50 verstellbar ist.

Die Zweit-Stator-Elektrode 60 und die Zweit-Aktor-Elektrode 62 ergeben beispielsweise einen weiteren elektrostatischen Antrieb, welcher über die Steuereinrichtung 54 betreibbar ist. Vorzugsweise sind die Zweit-Stator-Elektrode 60 und die Zweit-Aktor-Elektrode 62 als Out-Of-Plane-Antrieb (OOP-Antrieb) ausgebildet. Insbesondere können die Zweit-Elektroden 60 und 62 eine Gesamthöhe haben, welche gleich der Höhe h der Elektrodenuntereinheiten 50b und 52b oder 50c und 52c ist. Ein derartiger OOP-Antrieb weist den Vorteil auf, dass er gleichzeitig mit dem Strukturieren der Elektroden 50 und 52 aus zwei gemeinsamen Elektrodenmaterialschichten, zwischen welchen zumindest eine elektrisch isolierende Teilschicht angeordnet ist, heraus stroktorierbar ist. Allerdings kann mittels einer geeigneten Wahl der Ätzmaske dafür gesorgt werden, dass die Zweit-Elektroden 60 und 62 als Einlagenelektroden gebildet werden. Da ein entsprechendes Herstellungsverfahren für einen Fachmann anhand der vorhergehenden Beschreibung und der Fig. 4 nahegelegt ist, wird nicht ausführlicher darauf eingegangen.

Es wird hier jedoch darauf hingewiesen, dass die hier beschriebene Ausführungsform nicht auf Zweit-Elektroden 60 und 62 beschränkt ist, welche in ihrer spannungslosen Ausgangsstellung in der OOP-Anordnung zueinander angeordnet sind. Stattdessen können auch andere Ausführungsformen der Zweit-Elektroden 60 und 62 für ein Vorauslenken der Elektroden 50 und 52 aus ihrer spannungslosen Ausgangsstellung verwendet werden.

Durch das Anlegen einer Austenkspannung zwischen den Zweit-Elektroden 60 und 62 wird auch eine Austenkungsrichtung 58a oder 58b der Aktor-Elektrode 52 festgelegt. Beispielsweise werden dazu die Potentiale *π*1 und *π*3 an die entsprechende Zweit-Elektrode 60 und 62 angelegt. Seibstverständlich können auch andere Potentiale zum Anlegen der Auslenkspannung an die Zweit-Elektroden 60 und 62 angelegt werden. Somit kann auch bei einem symmetrischen Ansteuermodus die Aktor-Elektrode 52 in eine zuvor festgelegte Auslenkungsrichtung 58a oder 58b verstellt werden. Die in den oberen Absätzen beschriebenen Vorteile des symmetrischen Ansteuermodus sind deshalb auch durch die anhand der Fig. 4 beschriebene Ausführungsform realisierbar.

## Patentansprüche

1. Verfahren zum Betreiben eines elektrostatischen Antriebs mit einer Stator-Elektrode (50) und einer Aktor-Elektrode (52), welche als Mehrlagenelektroden so ausgebildet sind, dass mindestens eine erste Trennschicht (50a) die Stator-Elektrode (50) in mindestens eine erste Stator-Elektrodenuntereinheit (50b) und eine zweite Stator-Elektrodenuntereinheit (50c) unterteilt und mindestens eine zweite Trennschicht (52a) die Aktor-Elektrode (52) in mindestens eine erste Aktor-Elektrodenuntereinheit (52b) und eine zweite Aktor-Elektrodenuntereinheit (52c) unterteilt, wobei die Aktor-Elektrode (52) in ihrer spannungslosen Ausgangsstellung ohne eine zwischen einer Stator-Elektrodenuntereinheit (50b,50c) und einer Aktor-Elektrodenuntereinheit (52b,52c) angelegte Spannung so in Bezug auf die Stator-Elektrode (50) angeordnet ist, dass die erste Aktor-Elektrodenuntereiheit (52b) einen kleineren Abstand zu der ersten Stator-Elektrodenuntereinheit (50b) aufweist als die zweite Aktor-Elektrodenuntereinheit (52c), mit dem Schritt:
Vorauslenken der Aktor-Elektrode (52) in Bezug auf die Stator-Elektrode (50) aus ihrer spannungsiosen Ausgangsstellung in eine erste End-Stellung durch
Anlegen eines ersten Potentials (*π*1) an die erste Stator-Elektrodenuntereinheit (50b) und eines von dem ersten Potential (*π*1) abweichenden zweiten Potentials (*π*2) an die erste Aktor-Elektrodenuntereinheit (52b); und
Anlegen eines dritten Potential (*π*3) an die zweite Stator-Elektrodenuntereinheit (50c) und an die zweite Aktor-Elektrodenuntereinheit (52c), welches von dem ersten Potential *(π*1) und dem zweiten Potential (*π*2) abweicht.

2. Verfahren nach Anspruch 1, wobei die Aktor-Elektrode (52) in Bezug auf die Stator-Elektrode (50) in eine erste Richtung (58a), in welcher die erste Aktor-Elektrodenuntereinheit (52b) in Bezug auf die zweite Trennschicht (52a) liegt, vorausgelenkt wird, durch Anlegen eines zweiten Potentials (*π*2), welches in einem Bereich zwischen dem an die erste Stator-Elektrodenuntereinheit (50b) angelegten ersten Potentials (*π*1) und dem an die zweite Stator-Elektrodenuntereinheit (50c) und an die zweite Aktor-Elektrodenuntereinheit (52c) angelegten dritten Potential (*π*3) liegt, an die erste Aktor-Elektrodenuntereinheit (52b).

3. Verfahren nach Anspruch 1, wobei die Aktor-Elektrode (52) in Bezug auf die Stator-Elektrode (50) in eine zweite Richtung (58b), in welcher die zweiten Aktor-Elektrodenuntereinheit (52c) in Bezug auf die zweite Trennschicht (52a) liegt, vorausgelenkt wird, durch Anlegen eines ersten Potentials (*π*1), welches in einem Bereich zwischen dem an die erste Aktor-Elektrodenuntereinheit (52b) angelegten zweiten Potential (*π*2) und dem an die zweite Stator-Elektrodenuntereinheit (50c) und an die zweite Aktor-Elektrodenuntereinheit (52c) angelegten dritten Potential (*π*3) liegt, an die erste Stator-Elektrodenuntereinheit (50b).

4. Verfahren nach einem der vorhergehenden Ansprüche, wobei die Aktor-Elektrode (52) in Bezug auf die Stator-Elektrode (50) aus der ersten End-Stellung in eine zweite End-Stellung weiter ausgelenkt wird, durch Reduzieren einer Differenz zwischen dem an die erste Stator-Elektrodenuntereinheit (50b) angelegten ersten Potential (*π*1) und dem an die erste Aktor-Elektrodenuntereinheit (52b) angelegten zweiten Potential (*π*2).

5. Verfahren nach einem der vorhergehenden Ansprüche, wobei die Aktor-Elektrode (52) in Bezug auf die Stator-Elektrode (50) aus der zweiten End-Stellung in eine dritte Endstellung weiter ausgelenkt wird, durch Gleichsetzen des an die erste Stator-Elektrodenuntereinheit (50b) angelegten ersten Potentials (*π*1) und des an die erste Aktor-Elektrodenuntereinheit (52b) angelegten zweiten Potentials (*π*2) und Steigern einer Differenz zwischen dem an die zweite Stator-Elektrodenuntereinheit (50c) und an die zweite Aktor-Elektrodenuntereinheit (52c) angelegten dritten Potential (*π*3) und dem an die erste Stator-Elektrodenuntereinheit (50b) angelegten ersten Potential (*π*1).

6. Verfahren zum Betreiben eines elektrostatischen Antriebs mit einer Stator-Elektrode (50) und einer Aktor-Elektrode (52), welche als Mehrlagenelektroden so ausgebildet sind, dass mindestens eine erste Trennschicht (50a) die Stator-Elektrode (50) in mindestens eine erste Stator-Elektrodenuntereinheit (50b) und eine zweite Stator-Elektrodenuntereinheit (50c) unterteilt und mindestens eine zweite Trennschicht (52a) die Aktor-Elektrode (52) in mindestens eine erste Aktor-Elektrodenuntereinheit (52b) und eine zweite Aktor-Elektrodenuntereinheit (52c) unterteilt, wobei die Aktor-Elektrode (52) in ihrer spannungslosen Ausgangsstellung ohne eine zwischen einer Stator-Elektrodenuntereinheit (50b,50c) und einer Aktor-Elektrodenuntereinheit- (52b,52c) angelegte Spannung so in Bezug auf die Stator-Elektrode (50) angeordnet ist, dass die erste Aktor-Elektrodenuntereinheit (52b) einen kleineren Abstand zu der ersten Stator-Elektrodenuntereinheit (50b) aufweist als die zweite Aktor-Elektrodenuntereinheit (52c), mit den Schritten:
Vorauslenken der Aktor-Elektrode (52) in Bezug auf die Stator-Elektrode (50) aus ihrer spannungslosen Ausgangsstellung in eine End-Stellung, in welcher die Aktor-Elektrode (52) so in Bezug auf die Stator-Elektrode (50) angeordnet wird, dass ein erster Abstand zwischen der ersten Aktor-Elektrodenuntereinheit (52b) und der zweiten Stator-Elektrodenuntereinheit (50c) kleiner als ein zweiter Abstand zwischen der zweiten Aktor-Elektrodenuntereinheit (52c) und der ersten Stator-Elektrodenuntereinheit (50b) ist; und
Weiteres Auslenken der Aktor-Elektrode (52) in Bezug auf die Stator-Elektrode (50), so dass der erste Abstand zwischen der ersten Aktor-Elektrodenuntereinheit (52b) und der zweiten Siator-Elektrodenuntereinheit (50c) reduziert und der zweite Abstand zwischen der zweiten Aktor-Elektrodenuntereinheit (52c) und der ersten Stator-Elektrodenuntereinheit (50b) gesteigert wird durch
Anlegen eines ersten Potentials (*π*1) an die erste Stator-Elektrodenuntereinheit (50b) und an die erste Aktor-Elektrodenuntereinheit (52b);
Anlegen eines von dem ersten Potential (*π*1) abweichenden zweiten Potentials (*π*2) an die zweite Stator-Elektrodenuntereinheit (50c) und an die zweite Aktor-Elektrodenuntereinheit (52c); und
Steigern einer Differenz zwischen dem ersten Potential (*π*1) und dem zweiten Potential (*π*2).

7. Verfahren nach Anspruch 6, wobei zum Vorauslenken der Aktor-Elektrode (52) in Bezug auf die Stator-Elektrode (50) die Stator-Elektrode (50) an eine Zweit-Stator-Elektrode (60) und die Aktor-Elektrode (52) an eine Zweit-Aktor-Elektrode (62) so gekoppelt werden, dass über ein Verstellen der Zweit-Aktor-Elektrode (62) in Bezug auf die Zweit-Stator-Elektrode (60) die Aktor-Elektrode (52) in Bezug auf die Stator-Elektrode (50) verstellt wird, und zwischen der Zweit-Aktor-Elektrode (62) und der Zweit-Stator-Elektrode (60) eine Auslenkspannung ungleich Null zum Verstellen der Zweit-Aktor-Elektrode (62) angeiegt wird.

8. Verfahren zum Betreiben eines elektrostatischen Antriebs mit einer Stator-Elektrode (50) und einer Aktor-Elektrode (52), welche als Mehrlagenelektroden so ausgebildet sind, dass min-destens eine erste Trennschicht (50a) die Stator-Elektrode (50) in mindestens eine erste Stator-Elektrodenuntereinheit (50b) und eine zweite Stator-Elektrodenuntereinheit unterteilt (50c) und mindestens eine zweite Trennschicht (52a) die Aktor-Elektrode (52) in mindestens eine erste AktorElektrodenuntereinheit (52b) und eine zweite Aktor-Elektrodenuntereinheit (52c) unterteilt, wobei die Aktor-Elektrode (52) oder die Stator-Elektrode (50) mindestens noch eine dritte Trennschicht umfasst, weiche an der ersten Stator-Elektrodenuntereinheit (50b) oder der ersten Aktor-Elektrodenuntereinheit (52b) angeordnet ist und die erste Stator-Elektrodenuntereinheit (50b) oder die erste Aktor-Elektrodenuntereinheit (52b) von einer weiteren Elektrodenuntereinheit trennt, wobei die Aktor-Elektrode (52) in ihrer spannungslosen Ausgangsstellung ohne eine zwischen einer Stator-Elektrodenuntereinheit (50b, 50c) und einer Aktor-Elektrodenuntereinheit (52b, 52c) angelegte Spannung so in Bezug auf die Stator-Elektrode (50) angeordnet ist, dass die erste Aktor-Elektrodenuntereinheit (52b) einen kleineren Abstand zu der ersten Stator-Elektrodenuntereinheit (50b) aufweist als die zweite Aktor-Elektrodenuntereinheit (52c), mit den Schritten:
Vorauslenken der Aktor-Elektrode (52) in Bezug auf die Stator-Elektrode (50) aus ihrer spannungslosen Ausgangsstellung in eine End-Stellung durch
Anlegen eines ersten Potentials (π1) an die erste Stator-Elektrodenuntereinheit (50b) und an die erste Aktor-Elektrodenuntereinheit (52b);
Anlegen eines von dem ersten Potential abweichenden zweiten Potentials (*π*2) an die zweite Stator-Elektrodenuntereinheit (50c) und an die zweite Aktor-Elektrodenuntereinheit (52c); und
Anlegen eines von dem zweiten Potential (π2) abweichenden dritten Potentials (π3) an die weitere Elektrodenuntereinheit.

9. Elektrostatischer Antrieb mit:
einer Stator-Eiektrode (50) und einer Aktor-Elektrode (52), weiche als Mehrlagenelektroden so ausgebildet sind, dass mindestens eine erste Trennschicht (50a) die Stator-Elektrode (50) in mindestens eine erste Stator-Elektrodenuntereinheit (50b) und eine zweite Stator-Elektrodenuntereinheit (50c) unterteilt und mindestens eine zweite Trennschicht (52a) die Aktor-Elektrode (52) in mindestens eine erste Aktor-Elektrodenuntereinheit (52b) und eine zweite Aktor-Elektrodenuntereinheit (52c) unterteilt; und
einer Steuereinrichtung (54), welche dazu ausgelegt ist, Potentiale (*π*1,*π*2,*π*3) an die erste Stator-Elektrodenuntereinheit (50b), die zweite Stator-Elektrodenuntereinheit (50c), die erste Aktor-Elektrodenuntereinheit (52b) und die zweite Aktor-Elektrodenuntereinheit (52c) anzulegen;
wobei die Aktor-Elektrode (52) in ihrer spannungslosen Ausgangsstellung ohne eine zwischen einer Stator-Elektrodenuntereinheit (50b,50c) und einer Aktor-Elektrodenuntereinheit (52b,52c) anliegende Spannung so in Bezug auf die Stator-Elektrode (52) angeordnet ist, dass die erste Aktor-Elektrodenuntereinheit (52b) einen kleineren Abstand zu der ersten Stator-Elektrodenuntereinheit (50b) aufweist als die zweite Aktor-Elektrodenuntereinheit (52c), und wobei die Steuereinrichtung (54) in einem ersten Betriebsmodus dazu ausgelegt ist, ein erstes Potential (*π*1) an die erste Stator-Elektrodenuntereinheit (50b), ein von dem ersten Potential (*π*1) abweichendes zweites Potential (*π*2) an die erste Aktor-Elektrodenuntereinheit (52b) und ein drittes Potential (*π*3), welches von dem ersten Potential (*π*1) und dem zweiten Potential (*π*2) abweicht, an die zweite Stator-Elektrodenuntereinheit (50c) und an die zweite Aktor-Elektrodenuntereinheit (52c) anzulegen.

10. Elektrostatischer Antrieb nach Anspruch 9, wobei die Steuereinrichtung (54) zusätzlich in einem zweiten Betriebsmodus dazu ausgelegt ist, eine Differenz zwischen dem an der ersten Stator-Elektrodenuntereinheit (50b) anliegenden ersten Potential (*π*1) und dem an der ersten Aktor-Elektrodenuntereinheit (52b) anliegenden zweiten Potential (*π*2) zu reduzieren.

11. Elektrostatischer Antrieb nach Anspruch 9 oder 10, wobei die Steuereinrichtung (54) zusätzlich in einem dritten Betriebsmodus dazu ausgelegt ist, das an der ersten StatorElektrodenuntereinheit (50b) anliegende erste Potential (*π*1) und das an der ersten Aktor-Elektrodenuntereinheit (52b) anliegende zweite Potential (*π*2) gleichzusetzen und eine Differenz zwischen dem an der zweiten Stator-Elektrodenuntereinheit (50c) und an der zweiten Aktor-Elektrodenuntereinheit (52c) anliegenden dritten Potential (*π*3) und dem an der ersten Stator-Elektrodenuntereinheit (50b) anliegenden ersten Potential (*π*1) zu steigern.

12. Elektrostatischer Antrieb nach Anspruch 11, wobei die Steuereinrichtung (54) zusätzlich so ausgelegt, ist, dass sie sich bei einem Vorauslenken der Aktor-Elektrode (52) in Bezug auf die Stator-Elektrode (50) aus ihrer spannungslosen Ausgangsstellung in eine erste End-Stellung in den ersten Betriebsmodus, bei einem weiteren Auslenken der Aktor-Elektrode (52) in Bezug auf die Stator-Elektrode (50) aus der ersten End-Stellung in eine zweite End-Stellung in den zweiten Betriebsmodus und bei einem weiteren Auslenken der Aktor-Elektrode (52) in Bezug auf die Stator-Elektrode (50) aus der zweiten End-Stellung in eine dritte Endstellung in den dritten Betriebsmodus schaltet.

13. Elektrostatischer Antrieb mit:
einer Stator-Elektrode (50) und einer Aktor-Elektrode (52), weiche als Mehrlagenelektroden so ausgebildet sind, dass mindestens eine erste Trennschicht (50a) die Stator-Elektrode (50) in mindestens eine erste Stator-Elektrodenuntereinheit (50b) und eine zweite Stator-Elektrodenuntereinheit (50c) unterteilt und mindestens eine zweite Trennschicht (52a) die Aktor-Elektrode (52) in mindestens eine erste Aktor-Elektrodenuntereinheit (52b) und eine zweite Aktor-Elektrodenuntereinheit (52c) unterteilt; und
einer Steuereinrichtung (55), weiche dazu ausgelegt ist, Potentiale (*π*1,*π*2,*π*3) an die erste Stator-Elektrodenuntereinheit (50b), die zweite Stator-Elektrodenuntereinheit (50c), die erste Aktor-Elektrodenuntereinheit (52b) und die zweite Aktor-Elektrodenuntereinheit (52c) anzulegen;
wobei die Aktor-Elektrode (52) in ihrer spannungslosen Ausgangsstellung ohne eine zwischen einer Stator-Elektrodenuntereinheit (50b,50c) und einer Aktor-Elektrodenuntereinheit (52b,52c) anliegende Spannung so in Bezug auf die Stator-Elektrode (50) angeordnet ist, dass die erste Aktor-Elektrodenuntereinheit (52b) einen kleineren Abstand zu der ersten Stator-Elektrodenuntereinheit (50b) aufweist als die zweite Aktor-Elektrodenuntereinheit (52c),
und wobei die Steuereinrichtung (54) in einem Betriebsmodus dazu ausgelegt ist, ein erstes Potential (*π*1) an die erste Stator-Elektrodenuntereinheit (5E3b) und an die erste Aktor-Elektrodenuntereinheit (52b) und ein von dem ersten Potential (*π*1) abweichendes zweites Potential (*π*3) an die zweite Stator-Elektrodenuntereinheit (50c) und an die zweite Aktor-Elektrodenuntereinheit (52c) anzulegen und eine Differenz zwischen dem ersten Potential (*π*1) und dem zweiten Potential (*π*3) zu steigern.

14. Elektrostatischer Antrieb nach Anspruch 13, mit
einer an die Stator-Elektrode (50) gekoppelten Zweit-Stator-Elektrode (60); und
einer an die Aktor-Elektrode (52) gekoppelten Zweit-Aktor-Elektrode (62), wobei über ein Verstellen der Zweit-Aktor-Elektrode (62) in Bezug auf die Zweit-Stator-Elektrode (60) die Aktor-Elektrode (52) in Bezug auf die Stator-Elektrode (50) verstellbar ist;
und wobei die Steuereinrichtung (54) in dem Betriebsmodus zusätzlich dazu ausgelegt ist, zwischen der Zweit-Aktor-Elektrode (62) und der Zweit-Stator-Elektrode (60) eine Auslenkspannung ungleich Null anzulegen, durch welche die Zweit-Aktor-Elektrode (62) in Bezug auf die Zweit-Stator-Elektrode (60) verstellbar ist.

15. Elektrostatischer Antrieb mit:
einer Stator-Elektrode (50) und einer Aktor-Elektrode (52), welche als Mehrlagenelektroden so ausgebildet sind, dass mindestens eine erste Trennschicht (50a) die Stator-Elektrode (50) in mindestens eine erste Stator-Elektrodenuntereinheit (50b) und eine zweite Stator-Elektrodenuntereinheit (50c) unterteilt und mindestens eine zweite Trennschicht (52a) die Aktor-Elektrode (52) in mindestens eine erste Aktor-Elektrodenuntereinheit (52b) und eine zweite Aktor-Elektrodenuntereinheit (52c) unterteilt, wobei die Aktor-Elektrode (52) oder die Stator-Elektrode (50) mindestens noch eine dritte Trennschicht umfasst, welche an der ersten Stator-Elektrodenuntereinheit (50b) oder der ersten Aktor-Elektrodenuntereinheit (52b) angeordnet ist und die erste Stator-Elektrodenuntereinheit (50b) oder die erste Aktor-Elektrodenuntereinheit (52b) von einer weiteren Elektrodenuntereinheit trennt; und
einer Steuereinrichtung (54), welche dazu ausgelegt ist, Potentiale an die erste Stator-Elektrodenuntereinheit (50b), die zweite Stator-Elektrodenuntereinheit (50c), die erste Aktor-Elektrodenuntereinheit (52b), gie zweite Aktor-Elektrodenuntereinheit (52c) und an die weitere Elektro-denuntereinheit anzulegen;
wobei die Aktor-Elektrode (52) in ihrer spannungslosen Ausgangsstellung ohne eine zwischen einer Stator-Elektrodenuntereinheit (50b, 50c) und einer Aktor-Elektrodenuntereinheit (52b, 52c) anliegende Spannung so in Bezug auf die Stator-Elektrode (50) angeordnet ist, dass die erste Aktor-Elektrodenuntereinheit (52b) einen kleineren Abstand zu der ersten Stator-Elektrodenuntereinheit (50b) aufweist als die zweite Aktor-Elektrodenuntereinheit (52c),
und wobei die Steuereinrichtung (54) in einem Betriebsmodus dazu ausgelegt ist, ein erstes Potential (*π*1) an die erste Stator-Elektrodenuntereinheit (50b) und an die erste AktorElektrodenuntereinheit (52b), ein von dem ersten Potential (*π*1) abweichendes zweites Potential (*π*2) an die zweite Stator-Elektrodenuntereinheit (50c) und an die zweite Aktor-Elektrodenuntereinheit (52c), und ein von dem zweiten Potential (π2) abweichendes drittes Potential (π3) an die weitere Elektrodenunter-einheit anzulegen.

## Claims

1. Method for operating an electrostatic drive comprising a stator electrode (50) and an actuator electrode (52), which electrodes are in the form of multilayer electrodes such that at least a first separating layer (50a) divides the stator electrode (50) into at least a first stator electrode subunit (50b) and a second stator electrode subunit (50c), and at least a second separating layer (52a) divides the actuator electrode (52) into at least a first actuator electrode subunit (52b) and a second actuator electrode subunit (52c), wherein the actuator electrode (52), in its voltage-free initial position without a voltage applied between a stator electrode subunit (50b, 50c) and an actuator electrode subunit (52b, 52c), is arranged in such a way in relation to the stator electrode (50) that the first actuator electrode subunit (52b) has a smaller distance from the first stator electrode subunit (50b) than the second actuator electrode subunit (52c), said method comprising the following step:
deflecting the actuator electrode (52) forwards and outwards in relation to the stator electrode (50) out of its voltage-free initial position into a first end position by
applying a first potential (π1) to the first stator electrode subunit (50b) and a second potential (π2), which deviates from the first potential (π1), to the first actuator electrode subunit (52b); and
applying a third potential (π3) to the second stator electrode subunit (50c) and to the second actuator electrode subunit (52c), which third potential deviates from the first potential (π1) and the second potential (π2).

2. Method according to Claim 1, wherein the actuator electrode (52) is deflected forwards and outwards in relation to the stator electrode (50) in a first direction (58a), in which the first actuator electrode subunit (52b) lies in relation to the second separating layer (52a), by applying a second potential (π2), which is in a range between the first potential (π1) applied to the first stator electrode subunit (50b) and the third potential (π3) which is applied to the second stator electrode subunit (50c) and to the second actuator electrode subunit (52c), to the first actuator electrode subunit (52b).

3. Method according to Claim 1, wherein the actuator electrode (52) is deflected forwards and outwards in relation to the stator electrode (50) in a second direction (58b), in which the second actuator electrode subunit (52c) lies in relation to the second separating layer (52a), by applying a first potential (π1), which is in a range between the second potential (π2) applied to the first actuator electrode subunit (52b) and the third potential (π3) which is applied to the second stator electrode subunit (50c) and to the second actuator electrode subunit (52c), to the first stator electrode subunit (50b).

4. Method according to one of the preceding claims, wherein the actuator electrode (52) is deflected outwards further in relation to the stator electrode (50) out of the first end position into a second end position by reducing a difference between the first potential (π1) applied to the first stator electrode subunit (50b) and the second potential (π2) applied to the first actuator electrode subunit (52b).

5. Method according to one of the preceding claims, wherein the actuator electrode (52) is deflected outwards further in relation to the stator electrode (50) out of the second end position into a third end position by equating the first potential (π1) applied to the first stator electrode subunit (50b) and the second potential (π2) applied to the first actuator electrode subunit (52b), and increasing a difference between the third potential (π3) applied to the second stator electrode subunit (50c) and to the second actuator electrode subunit (52c) and the first potential (π1) applied to the first stator electrode subunit (50b).

6. Method for operating an electrostatic drive comprising a stator electrode (50) and an actuator electrode (52), which electrodes are in the form of multilayer electrodes such that at least a first separating layer (50a) divides the stator electrode (50) into at least a first stator electrode subunit (50b) and a second stator electrode subunit (50c), and at least a second separating layer (52a) divides the actuator electrode (52) into at least a first actuator electrode subunit (52b) and a second actuator electrode subunit (52c), wherein the actuator electrode (52), in its voltage-free initial position without a voltage applied between a stator electrode subunit (50b, 50c) and an actuator electrode subunit (52b, 52c), is arranged in such a way in relation to the stator electrode (50) that the first actuator electrode subunit (52b) has a smaller distance from the first stator electrode subunit (50b) than the second actuator electrode subunit (52c), said method comprising the following steps:
deflecting the actuator electrode (52) forwards and outwards in relation to the stator electrode (50) out of its voltage-free initial position into an end position, in which the actuator electrode (52) is arranged in relation to the stator electrode (50) in such a way that a first distance between the first actuator electrode subunit (52b) and the second stator electrode subunit (50c) is smaller than a second distance between the second actuator electrode subunit (52c) and the first stator electrode subunit (50b); and
deflecting the actuator electrode (52) further outwards in relation to the stator electrode (50), with the result that the first distance between the first actuator electrode subunit (52b) and the second stator electrode subunit (50c) is reduced and the second distance between the second actuator electrode subunit (52c) and the first stator electrode subunit (50b) is increased by
applying a first potential (π1) to the first stator electrode subunit (50b) and to the first actuator electrode subunit (52b);
applying a second potential (π2), which deviates from the first potential (π1), to the second stator electrode subunit (50c) and to the second actuator electrode subunit (52c); and
increasing a difference between the first potential (π1) and the second potential (π2).

7. Method according to Claim 6, wherein, in order to deflect the actuator electrode (52) forwards and outwards in relation to the stator electrode (50), the stator electrode (50) is coupled to a second stator electrode (60), and the actuator electrode (52) is coupled to a second actuator electrode (62) in such a way that, by moving the second actuator electrode (62) in relation to the second stator electrode (60), the actuator electrode (52) is moved in relation to the stator electrode (50), and a deflection voltage which is unequal to zero is applied between the second actuator electrode (62) and the second stator electrode (60) in order to move the second actuator electrode (62).

8. Method for operating an electrostatic drive comprising a stator electrode (50) and an actuator electrode (52), which electrodes are in the form of multilayer electrodes such that at least a first separating layer (50a) divides the stator electrode (50) into at least a first stator electrode subunit (50b) and a second stator electrode subunit (50c), and at least a second separating layer (52a) divides the actuator electrode (52) into at least a first actuator electrode subunit (52b) and a second actuator electrode subunit (52c), wherein the actuator electrode (52) or the stator electrode (50) comprises at least also a third separating layer, which is arranged on the first stator electrode subunit (50b) or the first actuator electrode subunit (52b) and separates the first stator electrode subunit (50b) or the first actuator electrode subunit (52b) from a further electrode subunit, wherein the actuator electrode (52), in its voltage-free initial position without a voltage applied between a stator electrode subunit (50b, 50c) and an actuator electrode subunit (52b, 52c), is arranged in such a way in relation to the stator electrode (50) that the first actuator electrode subunit (52b) has a smaller distance from the first stator electrode subunit (50b) than the second actuator electrode subunit (52c), said method comprising the following steps:
deflecting the actuator electrode (52) forwards and outwards in relation to the stator electrode (50) out of its voltage-free initial position into an end position by
applying a first potential (π1) to the first stator electrode subunit (50b) and to the first actuator electrode subunit (52b);
applying a second potential (π2), which deviates from the first potential, to the second stator electrode subunit (50c) and to the second actuator electrode subunit (52c); and
applying a third potential (π3), which deviates from the second potential (π2), to the further electrode subunit.

9. Electrostatic drive comprising:
a stator electrode (50) and an actuator electrode (52), which are in the form of multilayer electrodes such that at least a first separating layer (50a) divides the stator electrode (50) into at least a first stator electrode subunit (50b) and a second stator electrode subunit (50c), and at least a second separating layer (52a) divides the actuator electrode (52) into at least a first actuator electrode subunit (52b) and a second actuator electrode subunit (52c); and
a control device (54) which is designed to apply potentials (π1, π2, π3) to the first stator electrode subunit (50b), the second stator electrode subunit (50c), the first actuator electrode subunit (52b) and the second actuator electrode subunit (52c);
wherein the actuator electrode (52), in its voltage-free initial position without a voltage present between a stator electrode subunit (50b, 50c) and an actuator electrode subunit (52b, 52c), is arranged in relation to the stator electrode (50) in such a way that the first actuator electrode subunit (52b) has a smaller distance from the first stator electrode subunit (50b) than the second actuator electrode subunit (52c), and wherein the control device (54) is designed in a first operating mode to apply a first potential (π1) to the first stator electrode subunit (50b), a second potential (π2), which deviates from the first potential (π1), to the first actuator electrode subunit (52b) and a third potential (π3), which deviates from the first potential (π1) and the second potential (π2), to the second stator electrode subunit (50c) and to the second actuator electrode subunit (52c).

10. Electrostatic drive according to Claim 9, wherein the control device (54) is additionally designed in a second operating mode to reduce a difference between the first potential (π1) present at the first stator electrode subunit (50b) and the second potential (π2) present at the first actuator electrode subunit (52b).

11. Electrostatic drive according to Claim 9 or 10, wherein the control device (54) is additionally designed in a third operating mode to equate the first potential (π1) present at the first stator electrode subunit (50b) and the second potential (π2) present at the first actuator electrode subunit (52b) and to increase a difference between the third potential (π3) present at the second stator electrode subunit (50c) and at the second actuator electrode subunit (52c) and the first potential (π1) present at the first stator electrode subunit (50b).

12. Electrostatic drive according to Claim 11, wherein the control device (54) is additionally designed in such a way that, when the actuator electrode (52) is deflected forwards and outwards in relation to the stator electrode (50) out of its voltage-free initial position into a first end position, it is switched to the first operating mode, when the actuator electrode (52) is deflected further in relation to the stator electrode (50) out of the first end position into a second end position, it is switched to the second operating mode, and when the actuator electrode (52) is deflected further in relation to the stator electrode (50) out of the second end position into a third end position, it is switched to the third operating mode.

13. Electrostatic drive comprising:
a stator electrode (50) and an actuator electrode (52), which are in the form of multilayer electrodes such that at least a first separating layer (50a) divides the stator electrode (50) into at least a first stator electrode subunit (50b) and a second stator electrode subunit (50c), and at least a second separating layer (52a) divides the actuator electrode (52) into at least a first actuator electrode subunit (52b) and a second actuator electrode subunit (52c); and
a control device (54), which is designed to apply potentials (π1, π2, π3) to the first stator electrode subunit (50b), the second stator electrode subunit (50c), the first actuator electrode subunit (52b) and the second actuator electrode subunit (52c);
wherein the actuator electrode (52), in its voltage-free initial position without a voltage present between a stator electrode subunit (50b, 50c) and an actuator electrode subunit (52b, 52c), is arranged in relation to the stator electrode (50) in such a way that the first actuator electrode subunit (52b) has a smaller distance from the first stator electrode subunit (50b) than the second actuator electrode subunit (52c),
and wherein the control device (54) is designed in one operating mode to apply a first potential (π1) to the first stator electrode subunit (50b) and to the first actuator electrode subunit (52b) and a second potential (π3), which deviates from the first potential (π1), to the second stator electrode subunit (50c) and to the second actuator electrode subunit (52c) and to increase a difference between the first potential (π1) and the second potential (π3).

14. Electrostatic drive according to Claim 13, comprising
a second stator electrode (60) which is coupled to the stator electrode (50); and
a second actuator electrode (62), which is coupled to the actuator electrode (52), wherein the actuator electrode (52) can be moved in relation to the stator electrode (50) by virtue of the second actuator electrode (62) being moved in relation to the second stator electrode (60);
and wherein the control device (54) is additionally designed in the operating mode to apply a deflection voltage which is unequal to zero between the second actuator electrode (62) and the second stator electrode (60), by means of which deflection voltage the second actuator electrode (62) can be moved in relation to the second stator electrode (60).

15. Electrostatic drive comprising:
a stator electrode (50) and an actuator electrode (52), which are in the form of multilayer electrodes such that at least a first separating layer (50a) divides the stator electrode (50) into at least a first stator electrode subunit (50b) and a second stator electrode subunit (50c), and at least a second separating layer (52a) divides the actuator electrode (52) into at least a first actuator electrode subunit (52b) and a second actuator electrode subunit (52c), wherein the actuator electrode (52) or the stator electrode (50) comprises at least also a third separating layer, which is arranged on the first stator electrode subunit (50b) or on the first actuator electrode subunit (52b) and separates the first stator electrode subunit (50b) or the first actuator electrode subunit (52b) from a further electrode subunit; and
a control device (54), which is designed to apply potentials to the first stator electrode subunit (50b), the second stator electrode subunit (50c), the first actuator electrode subunit (52b), the second actuator electrode subunit (52c) and to the further electrode subunit;
wherein the actuator electrode (52), in its voltage-free initial position without a voltage present between a stator electrode subunit (50b, 50c) and an actuator electrode subunit (52b, 52c), is arranged in relation to the stator electrode (50) in such a way that the first actuator electrode subunit (52b) has a smaller distance from the first stator electrode subunit (50b) than the second actuator electrode subunit (52c),
and wherein the control device (54) is designed in one operating mode to apply a first potential (π1) to the first stator electrode subunit (50b) and to the first actuator electrode subunit (52b), a second potential (π2), which deviates from the first potential (π1), to the second stator electrode subunit (50c) and to the second actuator electrode subunit (52c), and a third potential (π3), which deviates from the second potential (π2), to the further electrode subunit.

## Revendications

1. Procédé d'utilisation d'un mécanisme d'entraînement électrostatique comprenant une électrode de stator (50) et une électrode d'actionneur (52) qui, en tant qu'électrodes multicouches, sont configurées de telle sorte qu'au moins une première couche de séparation (50a) divise l'électrode de stator (50) en au moins une première sous-unité d'électrode de stator (50b) et une deuxième sous-unité d'électrode de stator (50c) et au moins une deuxième couche de séparation (52a) divise l'électrode d'actionneur (52) en au moins une première sous-unité d'électrode d'actionneur (52b) et une deuxième sous-unité d'électrode d'actionneur (52c), l'électrode d'actionneur (52), dans sa position initiale hors tension en l'absence d'une tension appliquée entre une sous-unité d'électrode de stator (50b, 50c) et une sous-unité d'électrode d'actionneur (52b, 52c), étant disposée par rapport à l'électrode de stator (50) de telle sorte que la première sous-unité d'électrode d'actionneur (52b) présente un écart plus petit par rapport à la première sous-unité d'électrode de stator (50b) que la deuxième sous-unité d'électrode d'actionneur (52c), comprenant l'étape suivante :
pré-déviation de l'électrode d'actionneur (52) par rapport à l'électrode de stator (50) depuis sa position initiale hors tension en une première position finale par
application d'un premier potentiel (π1) à la première sous-unité d'électrode de stator (50b) et d'un deuxième potentiel (π2) différent du premier potentiel (π1) à la première sous-unité d'électrode d'actionneur (52b) ; et
application d'un troisième potentiel (π3) à la deuxième sous-unité d'électrode de stator (50c) et à la deuxième sous-unité d'électrode d'actionneur (52c), lequel est différent du premier potentiel (π1) et du deuxième potentiel (π2).

2. Procédé selon la revendication 1, selon lequel l'électrode d'actionneur (52) est pré-déviée par rapport à l'électrode de stator (50) dans une première direction (58a), dans laquelle se trouve la première sous-unité d'électrode d'actionneur (52b) par rapport à la deuxième couche de séparation (52a), en appliquant à la première sous-unité d'électrode d'actionneur (52b) un deuxième potentiel (π2) qui se situe dans une plage entre le premier potentiel (π1) appliqué à la première sous-unité d'électrode de stator (50b) et le troisième potentiel (π3) appliqué à la deuxième sous-unité d'électrode de stator (50c) et à la deuxième sous-unité d'électrode d'actionneur (52c).

3. Procédé selon la revendication 1, selon lequel l'électrode d'actionneur (52) est pré-déviée par rapport à l'électrode de stator (50) dans une deuxième direction (58b), dans laquelle se trouve la deuxième sous-unité d'électrode d'actionneur (52c) par rapport à la deuxième couche de séparation (52a), en appliquant à la première sous-unité d'électrode de stator (50b) un premier potentiel (π1) qui se situe dans une plage entre le deuxième potentiel (π2) appliqué à la première sous-unité d'électrode d'actionneur (52b) et le troisième potentiel (π3) appliqué à la deuxième sous-unité d'électrode de stator (50c) et à la deuxième sous-unité d'électrode d'actionneur (52c).

4. Procédé selon l'une des revendications précédentes, selon lequel l'électrode d'actionneur (52) est déviée davantage par rapport à l'électrode de stator (50) depuis la première position finale en une deuxième position finale en réduisant une différence entre le premier potentiel (π1) appliqué à la première sous-unité d'électrode de stator (50b) et le deuxième potentiel (π2) appliqué à la première sous-unité d'électrode d'actionneur (52b).

5. Procédé selon l'une des revendications précédentes, selon lequel l'électrode d'actionneur (52) est déviée davantage par rapport à l'électrode de stator (50) depuis la deuxième position finale en une troisième position finale en mettant au même niveau le premier potentiel (π1) appliqué à la première sous-unité d'électrode de stator (50b) et le deuxième potentiel (π2) appliqué à la première sous-unité d'électrode d'actionneur (52b) et en augmentant une différence entre le troisième potentiel (π3) appliqué à la deuxième sous-unité d'électrode de stator (50c) et à la deuxième sous-unité d'électrode d'actionneur (52c) et le premier potentiel (π1) appliqué à la première sous-unité d'électrode de stator (50b).

6. Procédé d'utilisation d'un mécanisme d'entraînement électrostatique comprenant une électrode de stator (50) et une électrode d'actionneur (52) qui, en tant qu'électrodes multicouches, sont configurées de telle sorte qu'au moins une première couche de séparation (50a) divise l'électrode de stator (50) en au moins une première sous-unité d'électrode de stator (50b) et une deuxième sous-unité d'électrode de stator (50c) et au moins une deuxième couche de séparation (52a) divise l'électrode d'actionneur (52) en au moins une première sous-unité d'électrode d'actionneur (52b) et une deuxième sous-unité d'électrode d'actionneur (52c), l'électrode d'actionneur (52), dans sa position initiale hors tension en l'absence d'une tension appliquée entre une sous-unité d'électrode de stator (50b, 50c) et une sous-unité d'électrode d'actionneur (52b, 52c), étant disposée par rapport à l'électrode de stator (50) de telle sorte que la première sous-unité d'électrode d'actionneur (52b) présente un écart plus petit par rapport à la première sous-unité d'électrode de stator (50b) que la deuxième sous-unité d'électrode d'actionneur (52c), comprenant les étapes suivantes :
pré-déviation de l'électrode d'actionneur (52) par rapport à l'électrode de stator (50) depuis sa position initiale hors tension en une position finale dans laquelle l'électrode d'actionneur (52) est disposée par rapport à l'électrode de stator (50) de telle sorte qu'un premier écart entre la première sous-unité d'électrode d'actionneur (52b) et la deuxième sous-unité d'électrode de stator (50c) est inférieur à un deuxième écart entre la deuxième sous-unité d'électrode d'actionneur (52c) et la première sous-unité d'électrode de stator (50b) ; et
déviation supplémentaire de l'électrode d'actionneur (52) par rapport à l'électrode de stator (50) de telle sorte que le premier écart entre la première sous-unité d'électrode d'actionneur (52b) et la deuxième sous-unité d'électrode de stator (50c) soit réduit et le deuxième écart entre la deuxième sous-unité d'électrode d'actionneur (52c) et la première sous-unité d'électrode de stator (50b) soit augmenté par application d'un premier potentiel (π1) à la première sous-unité d'électrode de stator (50b) et à la première sous-unité d'électrode d'actionneur (52b) ;
application d'un deuxième potentiel (π2) différent du premier potentiel (π1) à la deuxième sous-unité d'électrode de stator (50c) et à la deuxième sous-unité d'électrode d'actionneur (52c) ; et
augmentation d'une différence entre le premier potentiel (π1) et le deuxième potentiel (π2).

7. Procédé selon la revendication 6, selon lequel, pour la pré-déviation de l'électrode d'actionneur (52) par rapport à l'électrode de stator (50), l'électrode de stator (50) est couplée à une deuxième électrode de stator (60) et l'électrode d'actionneur (52) à une deuxième électrode d'actionneur (62) de telle sorte que l'électrode d'actionneur (52) est déplacée par rapport à l'électrode de stator (50) par le biais d'un déplacement de la deuxième électrode d'actionneur (62) par rapport à la deuxième électrode de stator (60) et une tension de déviation différente de zéro est appliquée entre la deuxième électrode d'actionneur (62) et la deuxième électrode de stator (60) pour le déplacement de la deuxième électrode d'actionneur (62).

8. Procédé d'utilisation d'un mécanisme d'entraînement électrostatique comprenant une électrode de stator (50) et une électrode d'actionneur (52) qui, en tant qu'électrodes multicouches, sont configurées de telle sorte qu'au moins une première couche de séparation (50a) divise l'électrode de stator (50) en au moins une première sous-unité d'électrode de stator (50b) et une deuxième sous-unité d'électrode de stator (50c) et au moins une deuxième couche de séparation (52a) divise l'électrode d'actionneur (52) en au moins une première sous-unité d'électrode d'actionneur (52b) et une deuxième sous-unité d'électrode d'actionneur (52c), l'électrode d'actionneur (52) ou l'électrode de stator (50) comprenant au moins encore une troisième couche de séparation qui est disposée sur la première sous-unité d'électrode de stator (50b) ou sur la première sous-unité d'électrode d'actionneur (52b) et sépare la première sous-unité d'électrode de stator (50b) ou la première sous-unité d'électrode d'actionneur (52b) d'une sous-unité d'électrode supplémentaire, l'électrode d'actionneur (52), dans sa position initiale hors tension en l'absence d'une tension appliquée entre une sous-unité d'électrode de stator (50b, 50c) et une sous-unité d'électrode d'actionneur (52b, 52c), étant disposée par rapport à l'électrode de stator (50) de telle sorte que la première sous-unité d'électrode d'actionneur (52b) présente un écart plus petit par rapport à la première sous-unité d'électrode de stator (50b) que la deuxième sous-unité d'électrode d'actionneur (52c), comprenant les étapes suivantes :
pré-déviation de l'électrode d'actionneur (52) par rapport à l'électrode de stator (50) depuis sa position initiale hors tension en une position finale par application d'un premier potentiel (π1) à la première sous-unité d'électrode de stator (50b) et à la première sous-unité d'électrode d'actionneur (52b) ;
application d'un deuxième potentiel (π2) différent du premier potentiel à la deuxième sous-unité d'électrode de stator (50c) et à la deuxième sous-unité d'électrode d'actionneur (52c) ; et
application d'un troisième potentiel (π3) différent du deuxième potentiel (π2) à la sous-unité d'électrode supplémentaire.

9. Mécanisme d'entraînement électrostatique comprenant :
une électrode de stator (50) et une électrode d'actionneur (52) qui, en tant qu'électrodes multicouches, sont configurées de telle sorte qu'au moins une première couche de séparation (50a) divise l'électrode de stator (50) en au moins une première sous-unité d'électrode de stator (50b) et une deuxième sous-unité d'électrode de stator (50c) et au moins une deuxième couche de séparation (52a) divise l'électrode d'actionneur (52) en au moins une première sous-unité d'électrode d'actionneur (52b) et une deuxième sous-unité d'électrode d'actionneur (52c) ; et
un dispositif de commande (54) qui est conçu pour appliquer des potentiels (π1, π2, π3) à la première sous-unité d'électrode de stator (50b), à la deuxième sous-unité d'électrode de stator (50c), à la première sous-unité d'électrode d'actionneur (52b) et à la deuxième sous-unité d'électrode d'actionneur (52c) ;
l'électrode d'actionneur (52), dans sa position initiale hors tension en l'absence d'une tension appliquée entre une sous-unité d'électrode de stator (50b, 50c) et une sous-unité d'électrode d'actionneur (52b, 52c), étant disposée par rapport à l'électrode de stator (50) de telle sorte que la première sous-unité d'électrode d'actionneur (52b) présente un écart plus petit par rapport à la première sous-unité d'électrode de stator (50b) que la deuxième sous-unité d'électrode d'actionneur (52c),
et le dispositif de commande (54), dans un premier mode de fonctionnement, étant conçu pour appliquer un premier potentiel (π1) à la première sous-unité d'électrode de stator (50b), un deuxième potentiel (π2) différent du premier potentiel (π1) à la première sous-unité d'électrode d'actionneur (52b) et un troisième potentiel (π3), lequel est différent du premier potentiel (π1) et du deuxième potentiel (π2), à la deuxième sous-unité d'électrode de stator (50c) et à la deuxième sous-unité d'électrode d'actionneur (52c).

10. Mécanisme d'entraînement électrostatique selon la revendication 9, avec lequel le dispositif de commande (54), dans un deuxième mode de fonctionnement, est en outre conçu pour réduire une différence entre le premier potentiel (π1) appliqué à la première sous-unité d'électrode de stator (50b) et le deuxième potentiel (π2) appliqué à la première sous-unité d'électrode d'actionneur (52b).

11. Mécanisme d'entraînement électrostatique selon la revendication 9 ou 10, avec lequel le dispositif de commande (54), dans un troisième mode de fonctionnement, est en outre conçu pour mettre au même niveau le premier potentiel (π1) appliqué à la première sous-unité d'électrode de stator (50b) et le deuxième potentiel (π2) appliqué à la première sous-unité d'électrode d'actionneur (52b) et augmenter une différence entre le troisième potentiel (π3) appliqué à la deuxième sous-unité d'électrode de stator (50c) et à la deuxième sous-unité d'électrode d'actionneur (52c) et le premier potentiel (π1) appliqué à la première sous-unité d'électrode de stator (50b).

12. Mécanisme d'entraînement électrostatique selon la revendication 11, avec lequel le dispositif de commande (54) est en outre conçu de telle sorte que lors d'une pré-déviation de l'électrode d'actionneur (52) par rapport à l'électrode de stator (50) depuis sa position initiale hors tension en une première position finale, il commute dans le premier mode de fonctionnement, dans le deuxième mode de fonctionnement lors d'une déviation supplémentaire de l'électrode d'actionneur (52) par rapport à l'électrode de stator (50) depuis la première position finale en une deuxième position finale, et dans le troisième mode de fonctionnement lors d'une déviation supplémentaire de l'électrode d'actionneur (52) par rapport à l'électrode de stator (50) depuis la deuxième position finale en une troisième position finale.

13. Mécanisme d'entraînement électrostatique comprenant :
une électrode de stator (50) et une électrode d'actionneur (52) qui, en tant qu'électrodes multicouches, sont configurées de telle sorte qu'au moins une première couche de séparation (50a) divise l'électrode de stator (50) en au moins une première sous-unité d'électrode de stator (50b) et une deuxième sous-unité d'électrode de stator (50c) et au moins une deuxième couche de séparation (52a) divise l'électrode d'actionneur (52) en au moins une première sous-unité d'électrode d'actionneur (52b) et une deuxième sous-unité d'électrode d'actionneur (52c) ; et
un dispositif de commande (54) qui est conçu pour appliquer des potentiels (π1, π2, π3) à la première sous-unité d'électrode de stator (50b), à la deuxième sous-unité d'électrode de stator (50c), à la première sous-unité d'électrode d'actionneur (52b) et à la deuxième sous-unité d'électrode d'actionneur (52c) ;
l'électrode d'actionneur (52), dans sa position initiale hors tension en l'absence d'une tension appliquée entre une sous-unité d'électrode de stator (50b, 50c) et une sous-unité d'électrode d'actionneur (52b, 52c), étant disposée par rapport à l'électrode de stator (50) de telle sorte que la première sous-unité d'électrode d'actionneur (52b) présente un écart plus petit par rapport à la première sous-unité d'électrode de stator (50b) que la deuxième sous-unité d'électrode d'actionneur (52c),
et le dispositif de commande (54), dans un premier mode de fonctionnement, étant conçu pour appliquer un premier potentiel (π1) à la première sous-unité d'électrode de stator (50b) et à la première sous-unité d'électrode d'actionneur (52b) et un deuxième potentiel (π3) différent du premier potentiel (π1) à la deuxième sous-unité d'électrode de stator (50c) et à la deuxième sous-unité d'électrode d'actionneur (52c), et pour augmenter une différence entre le premier potentiel (π1) et le deuxième potentiel (π3).

14. Mécanisme d'entraînement électrostatique selon la revendication 13, comprenant
une deuxième électrode de stator (60) couplée à l'électrode de stator (50) ; et
une deuxième électrode d'actionneur (62) couplée à l'électrode d'actionneur (52), l'électrode d'actionneur (52) pouvant être déplacée par rapport à l'électrode de stator (50) par le biais d'un déplacement de la deuxième électrode d'actionneur (62) par rapport à la deuxième électrode de stator (60) ;
et le dispositif de commande (54) dans le mode de fonctionnement étant en outre conçu pour appliquer entre la deuxième électrode d'actionneur (62) et la deuxième électrode de stator (60) une tension de déviation différente de zéro par laquelle la deuxième électrode d'actionneur (62) peut être déplacée par rapport à la deuxième électrode de stator (60).

15. Mécanisme d'entraînement électrostatique comprenant :
une électrode de stator (50) et une électrode d'actionneur (52) qui, en tant qu'électrodes multicouches, sont configurées de telle sorte qu'au moins une première couche de séparation (50a) divise l'électrode de stator (50) en au moins une première sous-unité d'électrode de stator (50b) et une deuxième sous-unité d'électrode de stator (50c) et au moins une deuxième couche de séparation (52a) divise l'électrode d'actionneur (52) en au moins une première sous-unité d'électrode d'actionneur (52b) et une deuxième sous-unité d'électrode d'actionneur (52c), l'électrode d'actionneur (52) ou l'électrode de stator (50) comprenant au moins encore une troisième couche de séparation qui est disposée sur la première sous-unité d'électrode de stator (50b) ou sur la première sous-unité d'électrode d'actionneur (52b) et sépare la première sous-unité d'électrode de stator (50b) ou la première sous-unité d'électrode d'actionneur (52b) d'une sous-unité d'électrode supplémentaire ; et
un dispositif de commande (54) qui est conçu pour appliquer des potentiels à la première sous-unité d'électrode de stator (50b), à la deuxième sous-unité d'électrode de stator (50c), à la première sous-unité d'électrode d'actionneur (52b), à la deuxième sous-unité d'électrode d'actionneur (52c) et à la sous-unité d'électrode supplémentaire ;
l'électrode d'actionneur (52), dans sa position initiale hors tension en l'absence d'une tension appliquée entre une sous-unité d'électrode de stator (50b, 50c) et une sous-unité d'électrode d'actionneur (52b, 52c), étant disposée par rapport à l'électrode de stator (50) de telle sorte que la première sous-unité d'électrode d'actionneur (52b) présente un écart plus petit par rapport à la première sous-unité d'électrode de stator (50b) que la deuxième sous-unité d'électrode d'actionneur (52c),
et le dispositif de commande (54), dans un mode de fonctionnement, étant conçu pour appliquer un premier potentiel (π1) à la première sous-unité d'électrode de stator (50b) et à la première sous-unité d'électrode d'actionneur (52b), un deuxième potentiel (π2) différent du premier potentiel (π1) à la deuxième sous-unité d'électrode de stator (50c) et à la deuxième sous-unité d'électrode d'actionneur (52c) et un troisième potentiel (π3) différent du deuxième potentiel (π2) à la sous-unité d'électrode supplémentaire.
